# EUROPEAN PATENT APPLICATION

(11) **EP 4 447 263 A1**
(43) Date of publication of application: **16.10.2024**
(21) Application number: 22916188.0
(22) Date of filing: 28.12.2022
(51) Int. Cl.: H02J 50/40, H01Q 9/16, H01Q 9/26, H02J 50/20

(54) **ANTENNA DEVICE AND ELECTRONIC EQUIPMENT**

(30) Priority: 28.12.2021 JP 2021215250; 28.10.2022 WO PCT/JP2022/040492
(71) Applicant: Sony Semiconductor Solutions Corporation, Atsugi-shi, Kanagawa 243-0014 (JP)
(72) Inventor: YOSHINO, Yoshitaka, Atsugi-shi, Kanagawa 243-0014 (JP)
(74) Representative: D Young & Co LLP
(86) International application number: PCT/JP2022/048662
(87) International publication number: WO 2023/127966

(57) **Abstract**

An antenna device according to an aspect of the present disclosure includes an antenna that has a dipole structure, and resonates and receives electric field energy of a radio wave in a frequency band to be used for space transmission wireless electric power feeding. The antenna includes first and second antenna elements. The first antenna element includes a conductor disposed on a contact face configured to come into contact with a human body or a metal member. The second antenna element includes another conductor that is different from the conductor of the first antenna element, and the second antenna element is provided in such a manner that the second antenna element does not come into contact with a human body or a metal member.

## Description

### Technical Field

The present disclosure relates to an antenna device and an electronic device.

### Background Art

Currently, various countries have researched space transmission wireless electric power feeding for IOT sensors and wearable devices. During the space transmission wireless electric power feeding, it is necessary to efficiently receive electric field energy of radio waves in a frequency band (hereinafter, referred to as "transmission frequency band) to be used for the space transmission wireless electric power feeding. However, it is difficult for small-sized devices to be provided with an antenna having a size enough to receive the electric field energy of radio waves in the transmission frequency band. It is to be noted that, for example, NPL 1 listed below discloses a monopole antenna that utilizes a vehicle body.

### Citation List

### Patent Literature

NPL 1: https://www.asnics.com/case/2021/06/30/29

### Summary of the Invention

Meanwhile, it is desirable to provide an antenna device and electronic device that allow the small-sized devices to effectively receive the electric field energy of radio waves in the transmission frequency band.

An antenna device according to a first aspect of the present disclosure includes an antenna that has a dipole structure, and resonates and receives electric field energy of a radio wave in a frequency band to be used for space transmission wireless electric power feeding. The antenna includes first and second antenna elements. The first antenna element includes a conductor disposed on a contact face configured to come into contact with a human body or a metal member. The second antenna element includes another conductor that is different from the conductor of the first antenna element, and the second antenna element is provided in such a manner that the second antenna element does not come into contact with a human body or a metal member.

An electronic device according to a second aspect of the present disclosure includes an antenna having a dipole structure, and a rectifier circuit. The antenna resonates and receives electric field energy of a radio wave in a frequency band to be used for space transmission wireless electric power feeding. The rectifier circuit rectifies a signal received by the antenna from an alternating-current signal to a direct-current signal, The antenna of the electronic device includes first and second antenna elements. The first antenna element includes a conductor disposed on a contact face configured to come into contact with a human body or a metal member. The second antenna element includes another conductor that is different from the conductor of the first antenna element, and the second antenna element is provided in such a manner that the second antenna element does not come into contact with a human body or a metal member.

The antenna device according to the first aspect of the present disclosure and the electronic device according to the second aspect of the present disclosure include the antenna that has a dipole structure, and resonates and receives electric field energy of a radio wave in a frequency band to be used for the space transmission wireless electric power feeding. The antenna section includes the first antenna element and the second antenna element. The first antenna element includes a conductor disposed on the contact face configured to come into contact with a human body or a metal member. The second antenna element includes another conductor that is different from the conductor of the first antenna element, and is provided in such a manner that the second antenna element does not come into contact with the human body or the metal member. This makes it possible to use the human body or the metal member as the first antenna element. As a result, this makes it possible to efficiently receive electric power even in a case where the second antenna element has a short length.

### Brief Description of Drawing

[FIG. 1] FIG. 1 is a diagram illustrating an example of functional blocks of an electric power transmission/reception system provided with an electronic device according to an embodiment of the present disclosure.
[FIG. 2] FIG. 2 is a diagram illustrating a circuit configuration example of an antenna section of the electric power transmission/reception system illustrated in FIG. 1.
[FIG. 3] FIG. 3 is a diagram illustrating a planar configuration example of an antenna device included in the electronic device illustrated in FIG. 1.
[FIG. 4] FIG. 4 is a diagram illustrating a cross-sectional configuration example of the antenna device illustrated in FIG. 3.
[FIG. 5] FIG. 5 is a diagram illustrating a cross-sectional configuration example of the antenna device illustrated in FIG. 3.
[FIG. 6] FIG. 6 is a diagram for describing capacitive coupling with regard to the antenna device illustrated in FIG. 4.
[FIG. 7] FIG. 7 is a diagram for describing capacitive coupling with regard to the antenna device illustrated in FIG. 4.
[FIG. 8] FIG. 8 is a diagram illustrating a planar configuration example of antenna elements of the antenna device illustrated in FIG. 4.
[FIG. 9] FIG. 9 is a diagram illustrating a planar configuration example of the antenna elements of the antenna device illustrated in FIG. 4.
[FIG. 10] FIG. 10 is a diagram illustrating a planar configuration example of the antenna elements of the antenna device illustrated in FIG. 4.
[FIG. 11] FIG. 11 is a diagram illustrating a planar configuration example of the antenna elements of the antenna device illustrated in FIG. 4.
[FIG. 12] FIG. 12 is a diagram illustrating a planar configuration example of the two antenna elements of the antenna device illustrated in FIG. 4.
[FIG. 13] FIG. 13 is a diagram illustrating a planar configuration example of the two antenna elements of the antenna device illustrated in FIG. 4.
[FIG. 14] FIG. 14(A) illustrates a result of measuring intensity of electric power received by the antenna device in a state where a human body or a metal member is not in contact with the antenna element. FIG. 14(B) illustrates a result of measuring intensity of electric power received by the antenna device in a state where the human body is in contact with the antenna element.
[FIG. 15] FIG. 15(A) illustrates a result of measuring impedance of the antenna device provided with a loading coil in a state where a human body or a metal member is not in contact with the antenna element. FIG. 15(B) illustrates a result of measuring impedance of the antenna device provided with the loading coil in a state where a metal member is in contact with the antenna element.
[FIG. 16] FIG. 16 is a diagram illustrating a circuit configuration example of the antenna device illustrated in FIG. 4.
[FIG. 17] FIG. 17 is a diagram illustrating a circuit configuration example of the antenna device illustrated in FIG. 4.
[FIG. 18] FIG. 18 is a diagram illustrating an example of a circuit configuration example of a rectifier circuit illustrated in FIG. 1.
[FIG. 19] FIG. 19 is a diagram for describing characteristics of diodes illustrated in FIG. 18.
[FIG. 20] FIG. 20 is a diagram illustrating an example of a waveform of voltage generated by a human body.
[FIG. 21] FIG. 21 is a diagram illustrating a modification example of the circuit configuration of the rectifier circuit illustrated in FIG. 1.
[FIG. 22] FIG. 22 is a diagram illustrating a configuration example for increasing output from a reception device illustrated in FIG. 1.
[FIG. 23] FIG. 23 is a diagram illustrating a configuration example for increasing output from the reception device illustrated in FIG. 1.
[FIG. 24] FIG. 24 is a diagram illustrating a configuration example in which the rectifier circuits illustrated in FIG. 1 are in serial connection.
[FIG. 25] FIG. 25 is a diagram illustrating a circuit configuration example of the rectifier circuits illustrated in FIG. 24.
[FIG. 26] FIG. 26 is a diagram illustrating a configuration example in which the rectifier circuits illustrated in FIG. 1 are in serial connection.
[FIG. 27] FIG. 27 is a diagram illustrating a circuit configuration example of the rectifier circuits illustrated in FIG. 26.
[FIG. 28] FIG. 28 is a diagram illustrating a configuration example in which the rectifier circuits illustrated in FIG. 1 are in parallel connection.
[FIG. 29] FIG. 29 is a diagram illustrating a circuit configuration example of the rectifier circuits illustrated in FIG. 28.
[FIG. 30] FIG. 30 is a diagram illustrating a configuration example in which the rectifier circuits illustrated in FIG. 1 are in parallel connection.
[FIG. 31] FIG. 31 is a diagram illustrating a circuit configuration example of the rectifier circuits illustrated in FIG. 30.
[FIG. 32] FIG. 32 is a diagram illustrating a modification example of functional blocks of the electric power transmission/reception system illustrated in FIG. 1.
[FIG. 33] FIG. 33 is a diagram illustrating a modification example of the functional blocks of an external device and electronic device illustrated in FIG. 32.
[FIG. 34] FIG. 34 is a schematic diagram illustrating a measurement device that measures a relation between earth resistance and output from a harvester.
[FIG. 35] FIG. 35 is a schematic diagram illustrating the measurement device that measures a relation between earth resistance and output from the harvester.
[FIG. 36] FIG. 36 is a graph illustrating the relation between earth resistance and output from the harvester.
[FIG. 37] FIG. 37 is a diagram illustrating a circuit configuration example of a test harvester.
[FIG. 38] FIG. 38 is a diagram illustrating a circuit configuration example of a high-pass filter structure.
[FIG. 39] FIG. 39 is a diagram illustrating an example of frequency characteristics of the high-pass filter illustrated in FIG. 38.
[FIG. 40] FIG. 40 is a diagram for describing an example of a method of measuring frequency components of electric field energy induced in a device.
[FIG. 41] FIG. 41 is a diagram illustrating an example of frequency characteristics of a parallel resonant circuit illustrated in FIG. 40.
[FIG. 42] FIG. 42 is a diagram for describing an example of another method of measuring frequency components of electric field energy induced in a device.
[FIG. 43] FIG. 43 is a diagram for describing an example of another method of measuring frequency components of electric field energy induced in a device.
[FIG. 44] FIG. 44 is a diagram illustrating a modification example of the circuit configuration of the rectifier circuit illustrated in FIG. 18.
[FIG. 45] FIG. 45 is a diagram illustrating a modification example of the circuit configuration of the rectifier circuit illustrated in FIG. 18.
[FIG. 46] FIG. 46 is a diagram illustrating modification examples of the circuit configuration of the rectifier circuit illustrated in FIG. 18.
[FIG. 47] FIG. 47 is a diagram illustrating a circuit configuration example of a game console main body.
[FIG. 48] FIG. 48 is a diagram illustrating a modification example of the circuit configuration of the game console main body illustrated in FIG. 47.
[FIG. 49] FIG. 49 is a diagram illustrating a modification example of the circuit configuration of the game console main body illustrated in FIG. 47.
[FIG. 50] FIG. 50 is a diagram illustrating a modification example of the circuit configuration of the game console main body illustrated in FIG. 48.
[FIG. 51] FIG. 51 is a diagram illustrating a modification example of the circuit configuration of the game console main body illustrated in FIG. 47.
[FIG. 52] FIG. 52 is a diagram illustrating a modification example of the circuit configuration of the game console main body illustrated in FIG. 48.
[FIG. 53] FIG. 53 is a diagram illustrating a modification example of the circuit configuration of the game console main body illustrated in FIG. 47.
[FIG. 54] FIG. 54 is a diagram illustrating a modification example of the circuit configuration of the game console main body illustrated in FIG. 48.
[FIG. 55] FIG. 55 is a diagram illustrating a schematic configuration example of an unmanned aerial vehicle.
[FIG. 56] FIG. 56 is a diagram illustrating a circuit configuration example of the unmanned aerial vehicle illustrated in FIG. 55.
[FIG. 57] FIG. 57 is a diagram illustrating a circuit configuration example of a charger section illustrated in FIG. 1 and FIG. 32.

### Modes for Carrying Out the Invention

Hereinafter, embodiments for carrying out the present disclosure will be described in detail with reference to the drawings.

### [Configuration]

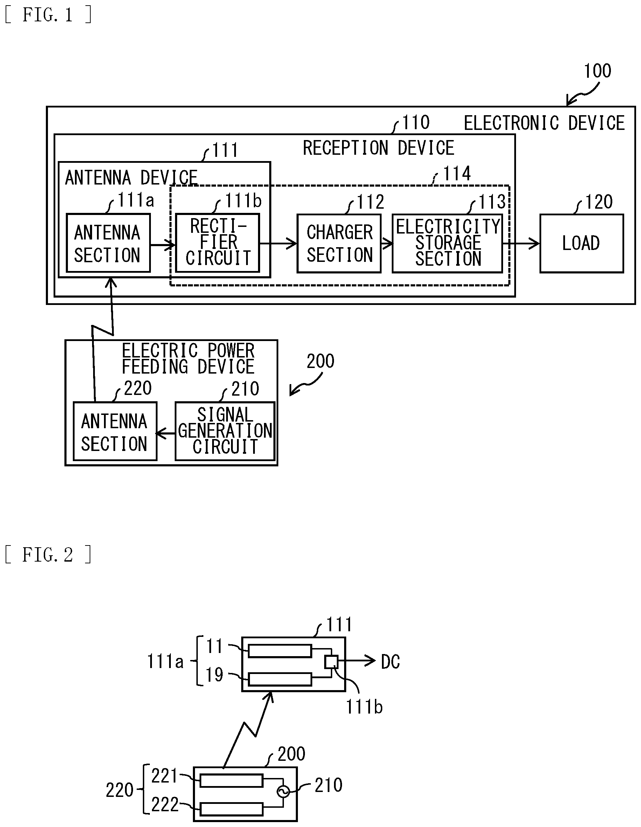

An electric power transmission/reception system provided with an electronic device 100 according to an embodiment of the present disclosure will be described. FIG. 1 illustrates an example of functional blocks of the electric power transmission/reception system illustrated in FIG. 1. In the electric power transmission/reception system, an electric power feeding device 200 transmits electric field energy of a radio wave in a predetermined frequency band to the electronic device 100, and the electronic device 100 receives the electric field energy of the radio wave in the predetermined frequency band from the electric power feeding device 200. Here, the predetermined frequency band is a predetermined frequency band to be used for space transmission wireless electric power feeding, and may be a 900 MHz band, a 2 GHz band, or a 5 GHz band, for example. The 900 MHz band is a frequency band including 920 MHz, for example. In the present specification, the frequency band to be used in the space transmission wireless electric power feeding is referred to as "transmission frequency band".

The electric power transmission/reception system transmits and receives electric power in a state where a human body or a metal member is not grounded to the ground (earth ground) at least in the transmission frequency band. For example, it is assumed that a person is standing on the ground (land surface, floor surface, or the like) with his/her shoes on. In this case, the human body is not grounded to the earth ground, and electric potential of the human body is electrically floating from the earth ground. In other words, the human body has higher impedance than the earth ground at least in the transmission frequency band. In this case, it is possible to avoid a situation where the electric power generated in the human body escapes to the earth ground, and to efficiently transmit and receive the electric power. In addition, for example, a vehicle including a metal member in at least a portion of its body is grounded to the ground (land surface, floor surface, or the like) via its tires. The tires have ground contact surfaces including insulating rubber. In this case, a metal portion of the vehicle body is not grounded to the earth ground, and electric potential of the metal portion of the vehicle body is electrically floating from the earth ground. In other words, the metal portion of the vehicle body has higher impedance than the earth ground at least in the transmission frequency band. Therefore, it is possible to avoid a situation where the electric power generated in the metal portion of the vehicle body escapes to the earth ground, and to efficiently transmit and receive the electric power.

It is possible for the electric power transmission/reception system to transmit and receive electric power in a frequency band (transmission frequency band) to be used in the space transmission wireless electric power feeding, without the human body or the metal member. In other words, the electric power transmission/reception system is characterized in that the transmission frequency band of the electric power does not change between a case where electric power is transmitted/received via a human body or a metal member and a case where electric power is transmitted/received without the human body or the metal member.

For example, as illustrated in FIG. 1, the electric power feeding device 200 includes an antenna section 220, a signal generation circuit 210, and a power supply section (not illustrated). The antenna section 220 functions as a transmission antenna that transmits electric power. For example, the antenna section 220 is an antenna having a dipole structure. For example, as illustrated in FIG. 2, the antenna section 220 includes two antenna elements 221 and 222. The signal generation circuit 210 generates an alternating-current (AC) electric power signal in the transmission frequency band and outputs the signal to the antenna section 220. The antenna section 220 outputs electric field energy of a radio wave in the transmission frequency band via the two antenna elements 221 and 222. The power supply section supplies electric power (electric power of electric power signal) to drive the signal generation circuit 210.

For example, as illustrated in FIG. 1, the electronic device 100 includes a reception device 110 and a load 120.

The reception device 110 includes an antenna device 111. The antenna device 111 includes an antenna section 111a and a rectifier circuit 111b. The antenna section 111a mainly functions as a reception antenna that resonates and receives electric field energy of a radio wave in a transmission frequency band. In the present specification, a frequency band receivable by the antenna section 111a is referred to as "electricity reception frequency band". The electricity reception frequency band includes the transmission frequency band. The antenna section 111a receives electric field energy of radio waves in the transmission frequency band from the electric power feeding device 200 via a human body or a metal member. Note that it is also possible for the antenna section 111a to receive the electric field energy of the radio waves in the transmission frequency band from the electric power feeding device 200 without the human body or the metal member (in other words, regardless of contact with the human body or the metal member).

It is also possible for the antenna section 111a to receive electric field energy of a quasi-electrostatic field (near field) or radio waves in a space via a human body or a metal member. In addition, it is also possible for the antenna section 111a to receive the electric field energy of a quasi-electrostatic field (near field) or radio waves in a space without the human body or the metal member.

There is a great deal of electric field energy around us, which can be divided into low frequency components and high frequency components. For example, the low frequency components include a leakage electric field from a home AC power supply, noise present in a vicinity of a personal computer, voltage generated when a person walks, and the like. These are referred to as the quasi-electrostatic fields. Meanwhile, the high frequency components include radio broadcasting, television broadcasting, mobile phone radio waves, and the like. These are referred to as the radio waves. As described above, it is also possible for the antenna section 111a to perform energy harvesting (ambient power generation) by which energy is derived from an ambient environment.

The rectifier circuit 111b rectifies AC energy received by the antenna section 111a and outputs direct-current (DC) energy obtained through the rectification to a subsequent stage. It is to be noted that the antenna device 111 includes no matching circuit that limits a frequency band to be input to the rectifier circuit 111b to the transmission frequency band. However, the antenna device 111 may include a band-pass filter that limits the frequency band to be input to the rectifier circuit 111b to a frequency band in a predetermined range including the transmission frequency band.

The reception device 110 further includes a charger section 112 and a electricity storage section 113. The charger section 112 outputs the DC energy input from the rectifier circuit 111b, to the electricity storage section 113. The charger section 112 may control electric discharge of the DC energy stored in the electricity storage section 113. For example, the electricity storage section 113 may include at least one of a capacitor or a battery that makes it possible to temporarily store the DC energy. For example, the electricity storage section 113 temporarily stores the DC energy input from the charger section 112. In a case where the electricity storage section 113 includes the capacitor and the battery, the electricity storage section 113 may be configured to store the DC energy from the charger section 112 in the capacitor, and to store other energy in the battery, the other energy being energy that the capacitor does not store. For example, the electricity storage section 113 is coupled to the load 120. The load 120 operates with use of electric power stored in the electricity storage section 113. For example, the load 120 includes a microcontroller, a wireless communication, section, a sensor, or the like. When the load 120 is supplied with the DC energy stored in the electricity storage section 113. The microcontroller controls the wireless communication section, the sensor, and the like, and an output from the sensor is output to an outside via the wireless communication section.

The antenna section 111a is an antenna having a dipole structure. For example, as illustrated in FIG. 2, the antenna section 111a includes two antenna elements 11 and 19. The antenna element 11 corresponds to a specific example of "first antenna element" according to the present disclosure. The antenna element 19 corresponds to a specific example of "second antenna element" according to the present disclosure. The antenna element 11 includes a conductor disposed on a contact face (contact face 17S to be described later) configured to come into contact with a human body or a metal member. The antenna element 19 includes another conductor that is different from the conductor of the antenna element 11, and the antenna element 19 is provided in such a manner that the antenna element 19 does not come into contact with the human body or the metal member.

The antenna element 11 includes a conductor electrode including any one or a combination of two or more materials selected from gold, silver, aluminum, copper, iron, nickel, an alloy, electrically conductive resin, or electrically conductive rubber, for example. The conductor electrode may be covered with a resin coating layer. The resin coating layer prevents the conductor electrode from corroding when coming into contact with moisture such as sweat or rain.

The antenna element 19 includes a conductor electrode including any one or a combination of two or more materials selected from gold, silver, aluminum, copper, iron, nickel, an alloy, electrically conductive resin, or electrically conductive rubber, for example. The conductor electrode may be covered with a resin coating layer. The resin coating layer prevents the conductor electrode from corroding when coming into contact with moisture such as sweat or rain.

The charger section 112, the electricity storage section 113, and circuits other than the antenna section 111a in the antenna device 111 constitute a circuit section 114 of the reception device 110.

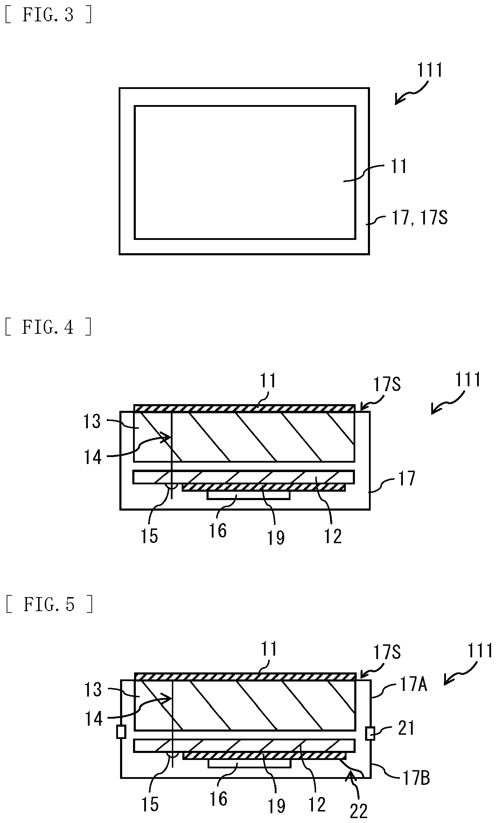

FIG. 3 illustrates a planar configuration example of the antenna device 111. FIG. 4 illustrates a cross-sectional configuration example of the antenna device 111 illustrated in FIG. 3. For example, as illustrated in FIG. 3 and FIG. 4, the antenna device 111 includes the antenna element 11, a dielectric section 13, an electrically conductive pin 14, a circuit substrate 12, the antenna element 19, a circuit section 16, and a case 17. In the antenna device 111, the antenna element 11, the dielectric section 13, and the circuit substrate 12 are stacked in layers in this order.

The antenna element 11 is disposed on the contact face 17S configured to come into contact with a human body or a metal member. For example, as illustrated in FIG. 3, the antenna element 11 is a conductor electrode having a thin plate-like shape. The dielectric section 13 is a dielectric that is provided between the antenna element 11 and the circuit substrate 12 and that has a plate-like shape. The dielectric section 13 supports the antenna element 11. Since the dielectric section 13 is provided on a back surface of the antenna element 11, it becomes possible to improve transmission efficiency from the antenna element 11 to the human body or the metal member, for example. It is to be noted that the dielectric section 13 may be omitted and there may be a certain space between the antenna element 11 and the circuit substrate 12.

The electrically conductive pin 14 is a pin-shaped wiring line that penetrates the dielectric section 13 and that couples the antenna element 11 to the circuit substrate 12. One end of the electrically conductive pin 14 is coupled to the antenna element 11, and another end of the electrically conductive pin 14 is coupled to an electrode (coupling point 15) of the circuit substrate 12. The circuit substrate 12 is a substrate on which the antenna element 19 and the circuit section 16 are provided. For example, as illustrated in FIG. 4, the antenna element 19, the circuit section 16, and the coupling point 15 are provided on a surface of the circuit substrate 12, the surface being opposite to the dielectric section 13. The coupling point 15 is an electrode that couples the circuit section 16 to the antenna element 19. The electrically conductive pin 14 penetrates the circuit substrate 12 and is soldered to the coupling point 15. It is to be noted that the antenna element 19, the circuit section 16, or the like may be provided on a surface of the circuit substrate 12, the surface being opposed to the dielectric section 13. Alternatively, the antenna element 19, the circuit section 16, or the like may be provided on the both surfaces of the circuit substrate 12.

The antenna element 19 is a conductor pattern (ground pattern) that serves as a ground for the circuit substrate 12. Typically, a copper-foil ground pattern is used as the antenna element 19. The antenna element 19 is configured in such a manner that the antenna element 19 does not come into contact with the human body or the metal member but is capacitively coupled to the earth ground. For example, when a conductor is not electrically coupled to the earth ground and is not shielded from the earth ground, the conductor is capacitively coupled to the earth ground via a space between the conductor and the earth ground. The antenna element 19 is configured to achieve such a conductor.

The circuit section 16 is a unit including various kinds of circuits. The unit is provided in such a manner that the unit does not overlap the antenna element 19. For example, the circuit section 16 includes the above-descried circuit section 40. For example, the circuit section 16 may be provided with a communication unit or the like. The communication unit communicates with other devices.

The antenna element 11, the dielectric section 13, the electrically conductive pin 14, the circuit substrate 12, the antenna element 19, the circuit section 16 are accommodated in the case 17. For example, the case 17 includes insulating material such as resin. It is to be noted that, for example, as illustrated in FIG. 5, the case 17 may include a case 17A and a case 17B. The case 17A includes non-metal material such as resin. The case 17B includes metal. At this time, the antenna element 19 and the case 17B may be electrically coupled to each other. For example, the case 17A and the case 17B are coupled via a coupling section 21 such as a screw, and the antenna element 19 and the case 17B are coupled via a wire.

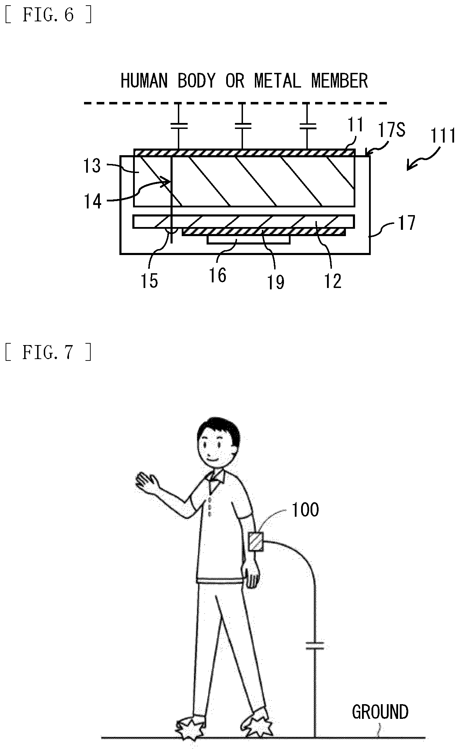

When the human body or the metal member is in contact with the contact face 17S including the antenna element 11, it is possible for the antenna device 111 to receive electric field energy of a quasi-electrostatic field (near field) or radio waves in a space with high sensitivity. As illustrated in FIG. 6, in terms of electricity, the antenna element 11 is coupled to a human body or a metal member through capacitive coupling. The antenna device 111 preferably includes the antenna element 11 that comes into direct contact with the human body or the metal member. Basically, the antenna element 11 preferably comes into surface contact with the human body or the metal member in such a manner that its capacitance increases.

In addition, as illustrated in FIG. 7, it can be considered that a pseudo ground is obtained through capacitive coupling between the earth ground and a ground (antenna element 19) for the circuit substrate 12 in a state where the electronic device 100 (hatched portion) is worn on an arm, for example. It is possible for the electronic device 100 to receive a quasi-electrostatic field (near field) of low frequency. It can be considered that one reason why the electronic device 100 makes it possible to receive low frequency such as 50 Hz for example, is that blood vessels serves as the antennas. As described above, the electronic device 100 makes it possible to receive radio waves in a wide frequency range through various kinds of capacitive coupling. Therefore, it is possible to take in the electric field energy without restrictions on the installation site of the electronic device 100.

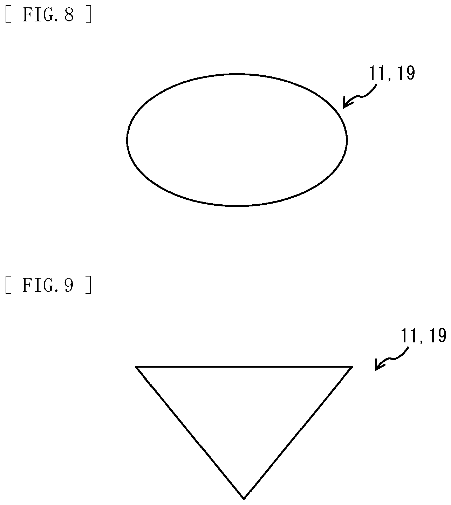

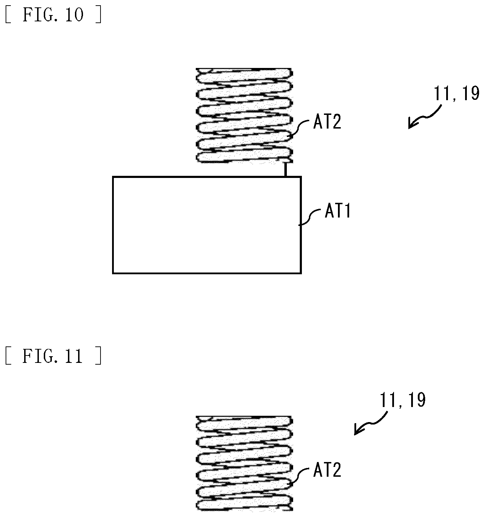

FIG. 8, FIG. 9, FIG. 10, and FIG. 11 illustrate respective examples of shapes of the antenna elements 11 and 19. For example, as illustrated in FIG. 8, the antenna elements 11 and 19 may have an elliptical shape in plan view. For example, as illustrated in FIG. 9, the antenna element 11 and 19 may have a triangular shape in plan view. For example, as illustrated in FIG. 10, the antenna elements 11 and 19 may include an antenna section AT1 having a plate-like shape and an antenna section AT2 having a coil-like shape, the antenna element AT2 being coupled to a tip of a corner of the antenna section AT1. For example, the antenna section AT2 is the loading coil. In such a case, for example, it is possible for the antenna section AT2 to mainly receive energy of radio waves in the transmission frequency band, and it is possible for the antenna section AT1 to mainly receive electric field energy in a band other than the transmission frequency band (for example, a quasi-electrostatic field (near field) or radio waves in a space). For example, as illustrated in FIG. 11, the antenna element 11 and 19 may include the antenna section AT2 alone. The shapes of the antenna elements 11 and 19 may be a combination of the above-described shapes. The antenna element 11 and 19 may have a same shape, or may have different shapes from each other. In addition, the antenna elements 11 and 19 are not limited to the above-described shapes. The shapes of the antenna elements 11 and 19 may be appropriately configured depending on frequency bands to be used for the space transmission wireless electric power feeding (WPT).

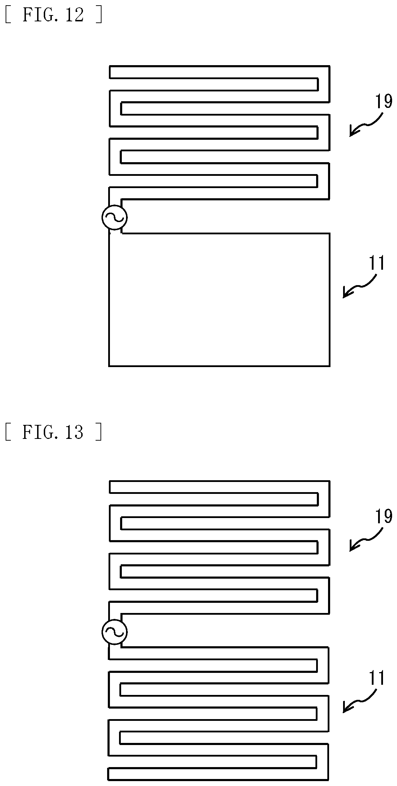

FIG. 12 and FIG. 13 illustrate respective examples of shapes of the antenna elements 11 and 19. Each of FIG. 12 and FIG. 13 illustrates an example in which the shapes of the antenna elements 11 and 19 are adjusted in such a manner that they resonate with 920 MHz. 920MHz is a frequency band to be used for the space transmission wireless electric power feeding (WPT). At this time, the shapes of the antenna elements 11 and 19 are adjusted in such a manner that they resonate with 920 MHz regardless of whether or not the antenna element 11 comes into contact with a human body or a metal member. For example, the antenna element 19 has a meander-like shape, in which the antenna size is shorter than a necessary antenna size for wavelength shortening. The antenna element 11 has a necessary length (for example, λ/4) depending on reception frequency. λ represents wavelength of the reception frequency. For example, the antenna element 11 includes a ground for a substrate, another conductor, or the like. In addition, the antenna element 11 and the antenna element 19 may be shortened depending on respective necessary wavelengths.

### [Effects]

Next, effects of the electronic device 100 according to the present embodiment will be described.

Currently, various countries have researched the space transmission wireless electric power feeding for IOT sensors and wearable devices. During the space transmission wireless electric power feeding, it is necessary to efficiently receive electric field energy of radio waves in a frequency band (hereinafter, referred to as "transmission frequency band) to be used for the space transmission wireless electric power feeding. However, it is difficult for small-sized devices to be provided with an antenna having a size enough to receive the electric field energy of radio waves in the transmission frequency band.

However, the electronic device 100 according to the present embodiment includes the antenna section 111a that has a dipole structure and receives electric field energy of a radio wave in a frequency band to be used for the space transmission wireless electric power feeding. The antenna section 111a makes it possible to resonate in a predetermined frequency band depending on a total length of the antenna element 11 and the antenna element 19. The antenna section 111a includes the antenna element 11 and the antenna element 19. The antenna element 11 includes a conductor disposed on the contact face configured to come into contact with a human body or a metal member. The antenna element 19 includes another conductor that is different from the conductor of the antenna element 11, and is provided in such a manner that the antenna element 19 does not come into contact with the human body or the metal member. This makes it possible to use the human body or the metal member as the antenna element 11. As a result, even in a case where the antenna element 19 has a short length, it becomes possible to apply a large amount of electric current to the human body or the metal member that is deemed larger metal with respect to the wavelength, and to efficiently receive electric power.

According to the present embodiment, a frequency band to be used for electric power transmission between the electronic device 100 and the electric power feeding device 200 is a 900 MHz band, a 2 GHz band, or a 5 GHz band. Therefore, for example, the wavelength of the 900 MHz band is about 33 cm, and it is necessary for the antenna section 111a to have a length of about 16.5 cm, which is a half of this wavelength. However, as described above, even in a case where the antenna element 19 has a length shorter than 16.5 cm (for example, shorter than 1/4 of the wavelength of the transmission frequency band), it is possible to apply a large amount of electric current to the human body or the metal member that is deemed larger metal with respect to the wavelength, and to efficiently receive electric power because the human body or the metal member is used as the antenna element 11.. In the 2 GHz band or the 5 GHz band, it is also possible to efficiently receive electric power even in a case where the antenna element has a length shorter than the necessary length for the antenna section 111a.

According to the present embodiment, the antenna element 11 has at least one of a plate-like shape, a meander-like shape, or a coil-like shape. In addition, the antenna element 19 also has at least one of the plate-like shape, the meander-like shape, or the coil-like shape. Such shapes of the antenna elements 11 and 19 make it possible to efficiently receive electric power even in a case where the antenna element 19 has a short length.

According to the present embodiment, the antenna element 19 includes the antenna sections AT1 and AT2. This makes it possible for the antenna section AT2 to mainly receive energy of radio waves in the transmission frequency band, and it becomes possible for the antenna section AT1 to mainly receive electric field energy in a band other than the transmission frequency band (for example, a quasi-electrostatic field (near field) or radio waves in a space), for example.

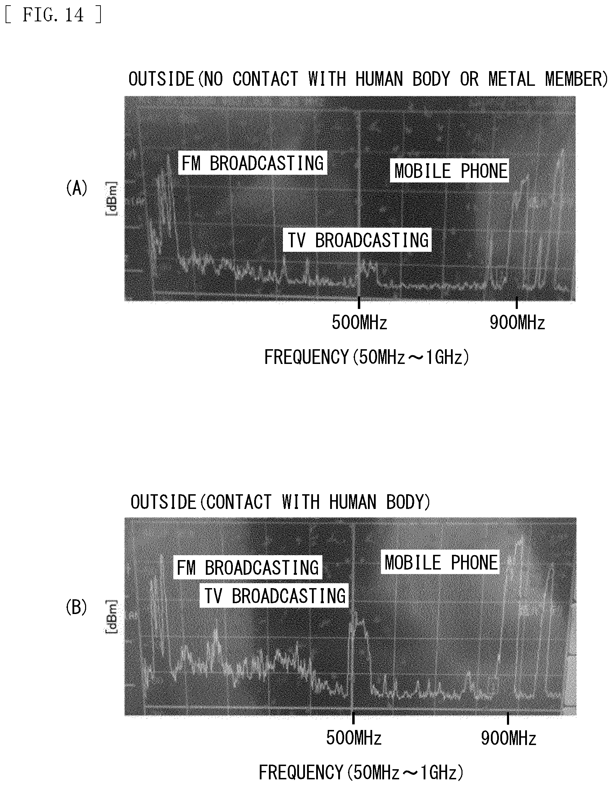

FIG. 14(A) illustrates a result of measuring intensity of electric power received by the antenna device 111 in a state where the antenna device 111 is installed outside and a human body or a metal member is not in contact with the antenna element 11. FIG. 14(B) illustrates a result of measuring intensity of electric power received by the antenna device 111 in a state where the antenna device 111 is installed outside and the human body is in contact with the antenna element 11. It is assumed that the transmission frequency is 900 MHz. In both FIG. 14(A) and FIG. 14(B), large sensitivity is obtained at the transmission frequency (900 MHz). In addition, in a case where a human body is in contact with the antenna element 11, intensity of electric power increases by about 10 dB than a case where the human body is not in contact with the antenna element 11.

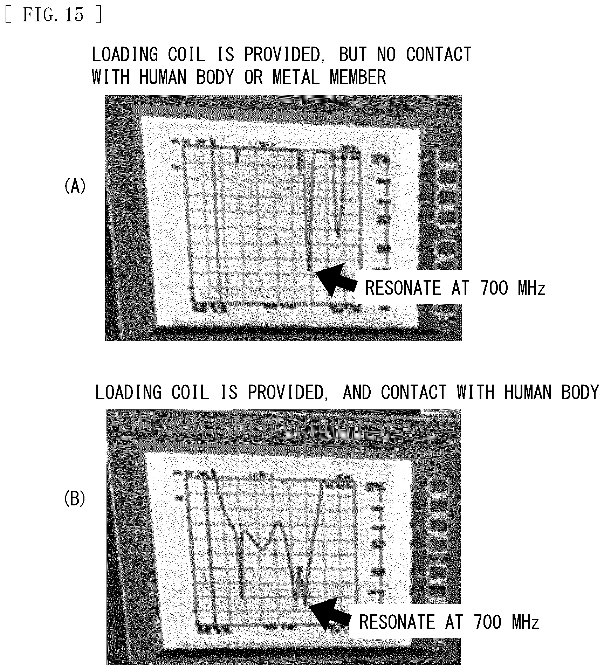

FIG. 15(A) and FIG. 15(B) illustrate results of measuring impedance of an antenna device 111 including an antenna element 19 provided with a loading coil as an antenna section 19B. FIG. 15(A) illustrates a result obtained when a human body or a metal member is not in contact with the antenna element 11. FIG. 15(B) illustrates a result obtained when a metal member is in contact with the antenna element 11. It is assumed that the transmission frequency is 700 MHz. In both FIG. 15(A) and FIG. 15(B), the antenna device 111 resonates at the transmission frequency (700 MHz).

As described above, according to the present embodiment, it is possible for the antenna device 111 to resonate at the transmission frequency regardless whether or not the antenna element 11 is in contact with a human body or a metal member, and it is possible to efficiently receive electric power at the transmission frequency.

It is to be noted that, with reference to FIG 14(A) and FIG. 14(B), it is recognized that the intensity of electric power increases in a frequency band (TV broadcasting frequency band: 500 MHz band) that is different from the transmission frequency when the antenna element 11 is in contact with a human body. Therefore, the antenna device 111 according to the present embodiment makes it also possible to receive electric power in the different frequency band from the transmission frequency.

### [Configuration of Circuit Substrate 12]

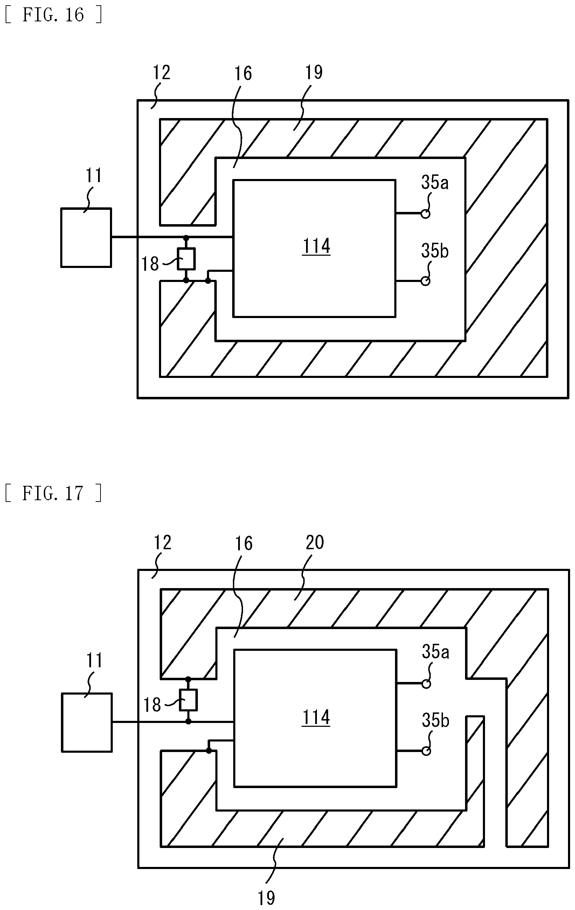

FIG. 16 illustrates a configuration example of the circuit substrate 12 of the antenna device 111. As illustrated in FIG. 16, the antenna element 19 is formed on the circuit substrate 12 included in the antenna device 111. The antenna element 19 has a copper-foil pattern that is common to the ground of the circuit substrate 12. The antenna element 11 and the antenna element 19 constitute the antenna section 111a. An electrostatic protection part(for example, varistor 18) is interposed between the antenna element 11 and the antenna element 19 in a case where electrostatic protection is necessary for the antenna element 11 configured to come into contact with a human body or a metal member. It is to be noted that the electrostatic protection part (for example, varistor 18) may be coupled between an output terminal 35a and the antenna element 19.

Output voltage is taken out from output terminals 35a and 35b of the circuit section 114. The circuit section 114 is provided in such a manner that the circuit section 114 does not overlap the antenna element 19. An input line to be output from the antenna element 11 to the circuit section 114 is in serial connection with the circuit section 114 without the matching circuit.

For example, as illustrated in FIG. 17, an antenna element 19 having another copper-foil pattern that is different from a ground 20 of the circuit substrate 12 may be provided on the circuit substrate 12. In this case, the antenna element 19 should not be in contact with a metal member or a human body from which energy will be taken in. Alternatively, for example, the antenna element 19 may be formed on a case 17B including metal (see FIG. 5). In this case, the electrostatic protection part (for example, varistor 18) may also be interposed between the antenna element 11 and the ground 20 for electrostatic protection. The electrostatic protection part (for example, varistor 18) may be coupled between the output terminal 35a and the ground 20, for example.

### [Configuration of Rectifier Circuit 111b]

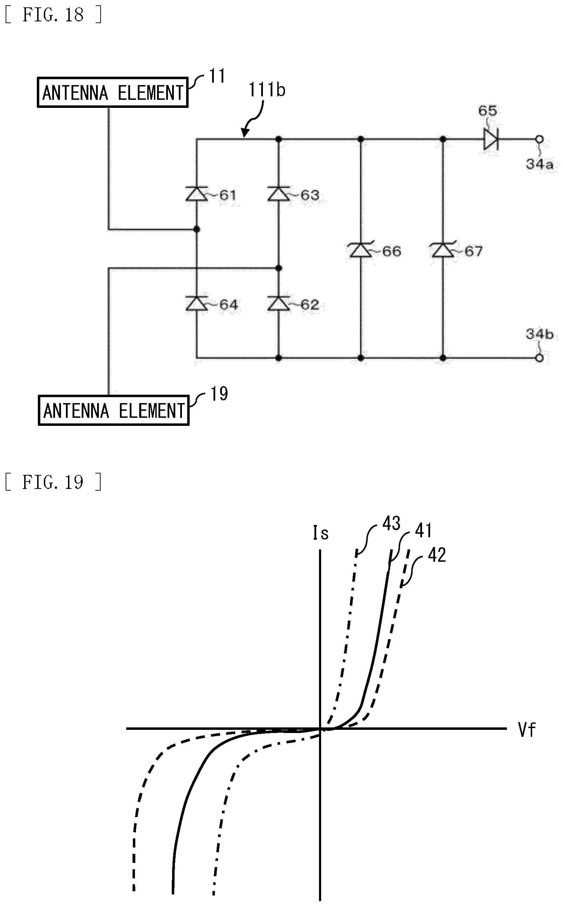

FIG. 18 illustrates a circuit configuration example of the rectifier circuit 111b. For example, as illustrated in FIG. 18, the rectifier circuit 111b includes a rectifier circuit, a varistor 66 for electrostatic protection, and a Zener diode 67 for IC protection (for example, Zener voltage of 6.5 V). The rectifier circuit includes four diodes 61 to 64.

The diode 61 and the diode 64 are in serial connection, and the diode 63 and the diode 62 are in serial connection. A coupling point between an anode of the diode 61 and a cathode of the diode 64 is coupled to the antenna element 11. A coupling point between an anode of the diode 63 and a cathode of the diode 62 is coupled to the antenna element 19. A coupling point between a cathode of the diode 61 and an anode of the diode 63 is coupled to one output terminal 34a via an anti-reverse diode 65. A coupling point between an anode of the diode 64 and an anode of the diode 62 is coupled to another output terminal 34b. The varistor 66 for electrostatic protection and the Zener diode 67 for IC protection are in parallel connection between the output terminal 34a and the output terminal 34b.

The four diodes 61 to 64 may be configured by a discrete diode or by a dedicated IC. FIG. 19 illustrates results of measuring forward voltage Vf and reverse current Is of the four diodes 61 to 64 used in the rectifier circuit 111b. As diode product number 1N60, silicon and germanium products were measured. As another product number ISS108, a germanium product manufactured by another manufacturer was evaluated. In FIG. 19, a curve 42 represents a characteristic of 1N60 (silicon), a curve 41 represents a characteristic of 1N60 (germanium), and a curve 43 represents a characteristic of ISS108 (germanium).

**[Table 1]**

| | Room Temperature | | Rectification by human body antenna |
|---|---|---|---|
| | Forward voltage Vf [mV] | Reverse current Is [µA] | |
| 1N60 (silicon) | 367 | 1 | Yes |
| 1N60 (germanium) | 303 | 7 | No |
| ISS108 | 162 | 26 | No |

A current flowing when voltage is applied in a reverse direction of the four diode 61 to 64 is the reverse current Is. The measurement data in Table 1 is data obtained when 10 V is applied in the reverse direction of the diodes. The forward voltage Vf is voltage at which forward current (1 mA) starts to flow through the diodes.

In a case where outputs of the antenna elements 11 and 19 are rectified, it has been found that the diode 1N60 (silicon) in which the current does not flow in the reverse direction can take in power more than a diode in which the voltage at which the current starts to flow in the forward direction is low. The rectified input is an alternating current, and the reverse current Is obtained when the forward voltage Vf of the diodes 61 to 64 is applied in the reverse direction is data of 10 V in Table 1. Therefore, when the reverse current Is to be obtained when the same voltage as Vf is applied in the reverse direction is calculated from the data, 1N60 (silicon) is 0.036 µA, 1N60 (germanium) is 0.21 µA, and ISS108 (germanium) is 0.5 µA. Thus, the ratio of forward current (1 mA)/reverse current Is is calculated to be 1/27778 for 1N60 (silicon), 1/4762 for 1N60 (germanium), and 1/2000 for ISS108 (germanium). That is, for the diodes 61 to 64 used in the rectifier circuit 111b, the above-described ratio has to be larger than about 4700 times, and preferably, the above-described ratio is 10,000 or more. As a result, among the three diodes mentioned above as examples, 1N60 (silicon) has the most suitable characteristics.

Moreover, considering the characteristics of the diodes 61 to 64, the reverse current Is to be applied in the reverse direction is preferably small. When a reverse resistance value is calculated using data of 10 V, 1N60 (silicon) is 100 MS2, 1N60 (germanium) is 1.43 MS2, and ISS108 (germanium) is 0.38 MS2. That is, the resistance value for preventing the current from flowing in the reverse direction is preferably large, and as the diodes 61 to 64 used in the rectifier circuit 111b, the above-described resistance value has to be larger than 1.43 MΩ, and is preferably 10 MΩ or more. As a result, among the three diodes mentioned above as examples, 1N60 (silicon) has the most suitable characteristics.

### <2. Modification Examples>

Next, modification examples of the electronic device 100 will be described.

### [Modification Example A]

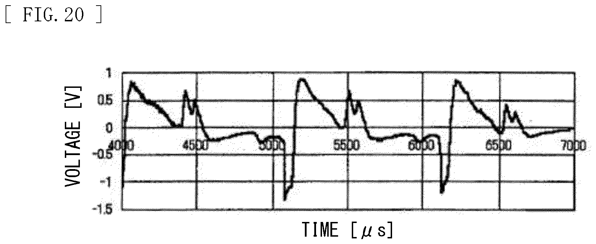

In the above-described embodiment, the antenna elements 11 and 19 may be configured to receive an electric field generated when a person walks. At this time, outputs from the antenna elements 11 and 19 have a voltage waveform as illustrated in FIG. 20, for example. As described above, the reception device 110 takes in the electric field generated when a person walks as energy, and thereby the electronic device 100 makes it possible to receive enough electric power even in a place with small extrinsic noise, for example.

### [Modification Example B]

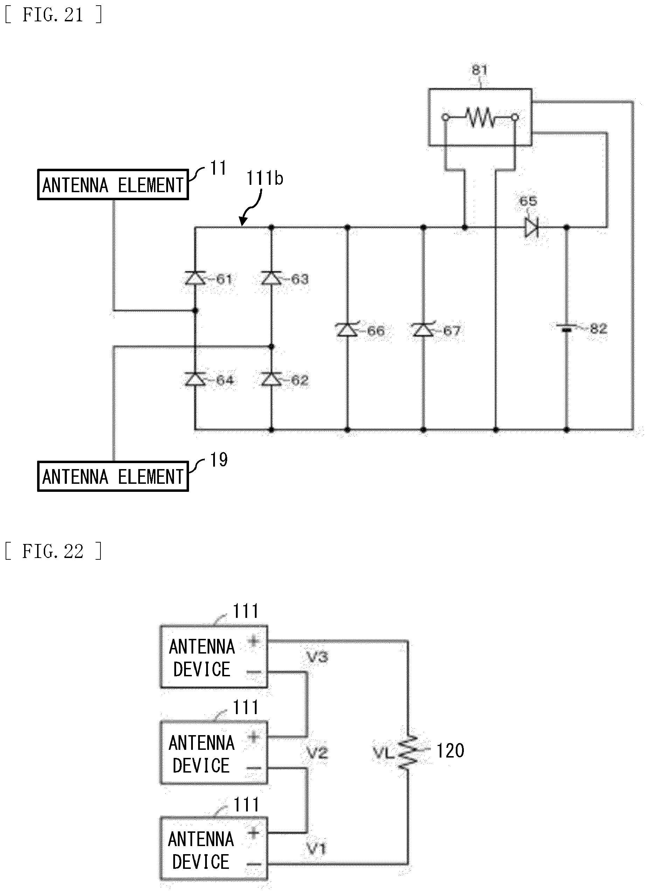

In the above-described embodiment and modification example thereof, the rectifier circuit 111b may further include a voltmeter 81 as illustrated in FIG. 21, for example. The voltmeter 81 is a high-resistance voltmeter (2 MΩ or more. Desirably, 10 MΩ) that measures output voltage of a full-wave rectifier circuit. In addition, for example, as illustrated in FIG. 21, the rectifier circuit 111b may further include a battery 82 that stores output from the full-wave rectifier circuit via the anti-reverse diode 65. At this time, output from the battery 82 may be used as a power source for the voltmeter 81.

Here, it is assumed that output from the voltmeter 81 is analyzed by a computer or the like. In this case, for example, it is possible to identify individuals by checking the output from the voltmeter 81 against data of voltage fluctuation obtained from walking. In addition, it is also possible to estimate his/her health condition by checking the output from the voltmeter 81 against data of voltage fluctuation associated with various kinds of human health conditions.

### [Modification Example C]

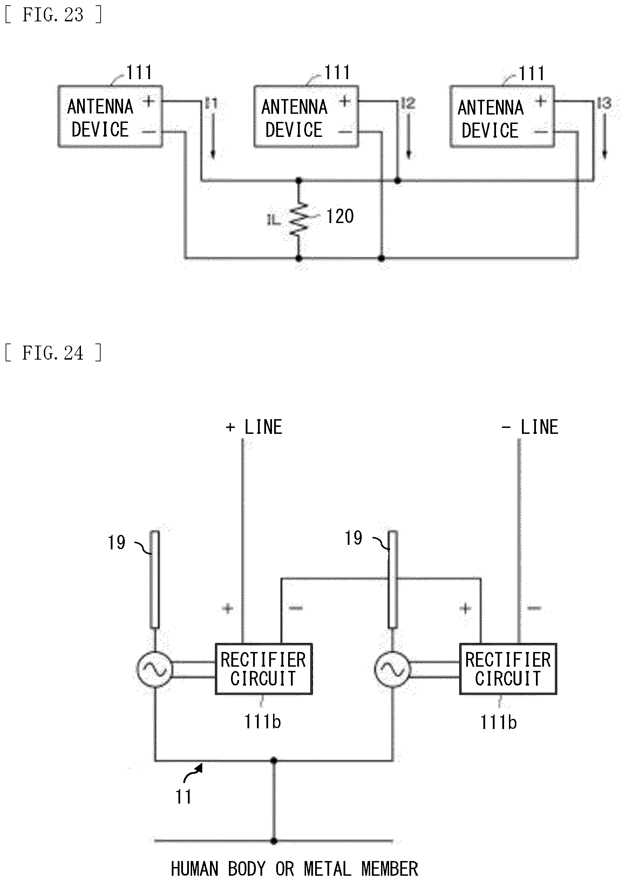

In the above-described embodiment and modification examples thereof, a plurality of the antenna devices 111 may be in serial connection as illustrated in FIG. 22, for example. At this time, voltage VL applied to the load 120 is a sum of outputs from the respective antenna devices 111 (V1 + V2 + V3). In addition, in the above-described embodiment and modification examples thereof, the plurality of antenna devices 111 may be coupled in parallel connection as illustrated in FIG. 23, for example. At this time, current IL flowing through the load 120 is a sum of outputs from the respective antenna devices 111 (I1 + I2 +I 3).

FIG. 24 illustrates an example in which output voltage from the antenna device 111 is increased. In this example, there is prepared the antenna element 11 that comes into contact with a human body or a metal member, and the two antenna element 19 are prepared for the antenna element 11. In addition, there are prepared rectifier circuits 111b that rectify outputs from antenna sections, each of which includes a pair of the antenna elements 11 and 19. The two rectifier circuits 111b are in serial connection, and outputs from the two rectifier circuits 111b that are in serial connection are input into the charger section 112.

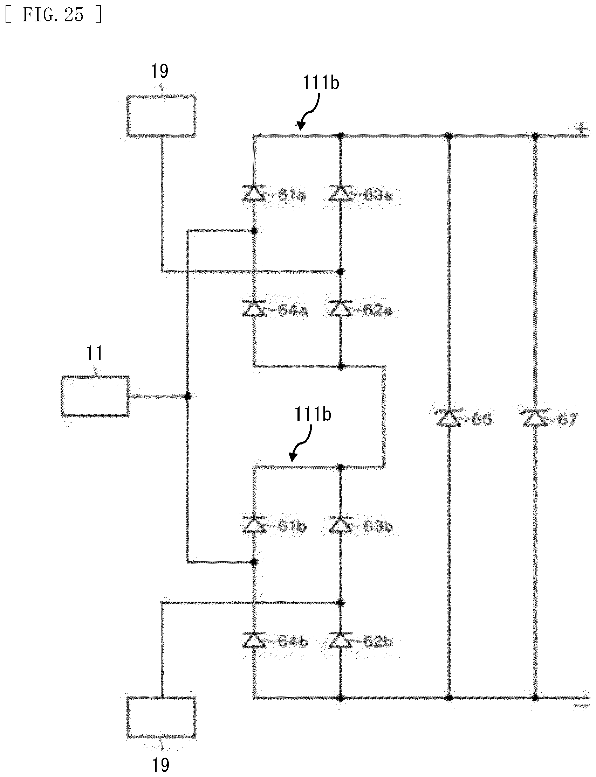

FIG. 25 illustrates a circuit configuration example of the antenna device 111 illustrated in FIG. 24. The full-wave rectifier circuits are used as the two rectifier circuits 111b that are in serial connection. The varistor 66 for electrostatic protection and the Zener diode 67 for IC protection are elements common to the two rectifier circuits 111b. This makes it possible to obtain output voltage of 8 V in a case where output voltage of 4 V is obtained from the single antenna device 111, for example. As described above, it is possible to obtain larger output voltage from the plurality of (two or more) rectifier circuits 111b that are in serial connection. It is to be noted that, in a case where power supply noise or the like that induces voltage has low frequency, the configuration according to the present modification example is suitable because it is not necessary to consider a distance between antennas.

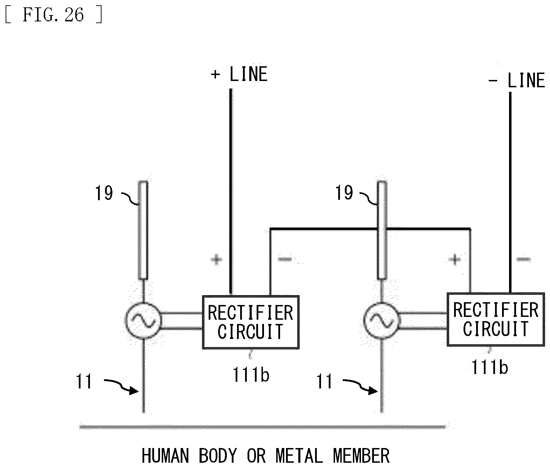

FIG. 26 illustrates an example in which output voltage from the antenna device 111 is increased. In this example, two independent antenna elements 11 are prepared as the antenna elements 11 that come into contact with a human body. In addition, two independent antenna elements 19 are prepared as the antenna elements 19 that are capacitively coupled to the earth. For each of the antenna elements 19, there is prepared the rectifier circuit 111b that rectifies output from the antenna section including the antenna elements 11 and 19. The two rectifier circuits 111b are in serial connection, and outputs from the two rectifier circuits 111b that are in serial connection are input into the charger section 112.

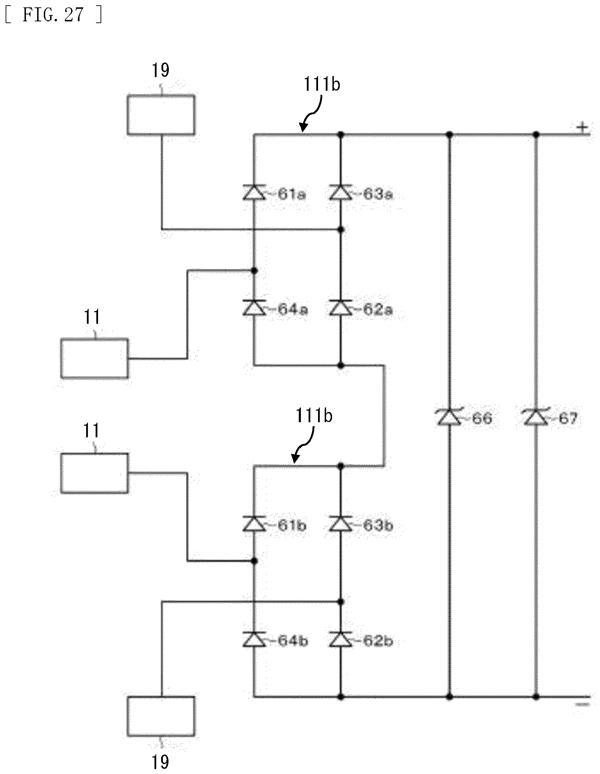

FIG. 27 illustrates a configuration example of the antenna device 111 including the two rectifier circuits 111b that are in serial connection. The varistor 66 for electrostatic protection and the Zener diode 67 for IC protection are elements common to the two rectifier circuits 111b. This makes it possible to obtain output voltage of 8 V in a case where output voltage of 4 V is obtained from the single antenna device 111, for example. As described above, it is possible to obtain larger output voltage from the plurality of (two or more) rectifier circuits 111b that are in serial connection. It is to be noted that, in a case where power supply noise or the like that induces voltage has low frequency, the configuration according to the present modification example is suitable because it is not necessary to consider a distance between antennas.

In FIG. 24 and FIG. 26, the respective antenna elements 11 are coupled to a coupling point between a diode 61a and a diode 64a and a coupling point between a diode 61b and a 64b in such a manner that the two rectifier circuits 111b have a same phase. In addition, in FIG. 25 and FIG. 27, the two respective antenna elements 19 are coupled to a coupling point between a diode 62a and a diode 63a and a coupling point between a diode 62b and a 63b in such a manner that the two rectifier circuits 111b have a same phase.

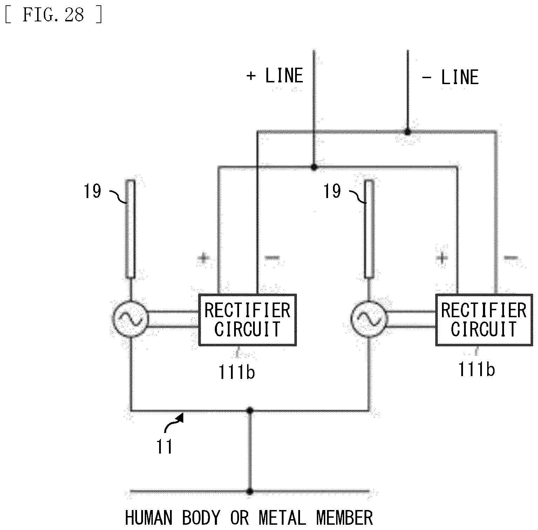

FIG. 28 illustrates an example in which output current from the antenna device 111 is increased. In this example, there is prepared the antenna element 11 that comes into contact with a human body or a metal member, and the two antenna element 19 are prepared for the antenna element 11. For each of the antenna elements 19, there is prepared the rectifier circuit 111b that rectifies output from an antenna section including the antenna elements 11 and 19. The two rectifier circuits 111b are in parallel connection, and outputs from the two rectifier circuits 111b that are in parallel connection are input into the charger section 112.

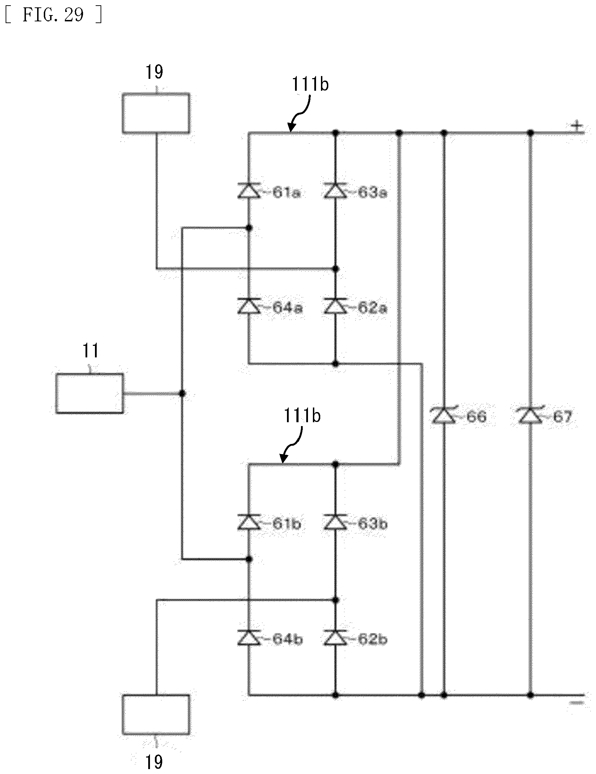

FIG. 29 illustrates a circuit configuration example of the antenna device 111 illustrated in FIG. 28. The full-wave rectifier circuits are used as the two rectifier circuits 111b that are in parallel connection. The varistor 66 for electrostatic protection and the Zener diode 67 for IC protection are elements common to the two rectifier circuits 111b. This makes it possible to obtain output current of 2 µA in a case where output current of 1 µA is obtained from the single antenna device 111, for example. As described above, it is possible to obtain larger output current from the plurality of (two or more) rectifier circuits 111b that are in parallel connection. It is to be noted that, in a case where power supply noise or the like that induces voltage has low frequency, the configuration according to the present modification example is suitable because it is not necessary to consider a distance between antennas.

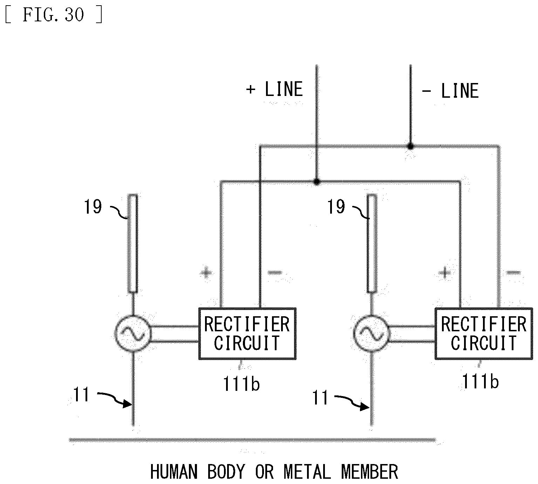

FIG. 30 illustrates an example in which output current from the antenna device 111 is increased. In this example, two independent antenna elements 11 are prepared as the antenna elements 11 that come into contact with a human body. In addition, two antenna elements 19 that come into contact with different parts of the human body are prepared as the antenna elements 19 that are capacitively coupled to the earth. For each of the antenna elements 19, there is prepared the rectifier circuit 111b that rectifies output from an antenna section including the antenna elements 11 and 19. The two rectifier circuits 111b are in parallel connection, and outputs from the two rectifier circuits 111b that are in parallel connection are input into the charger section 112.

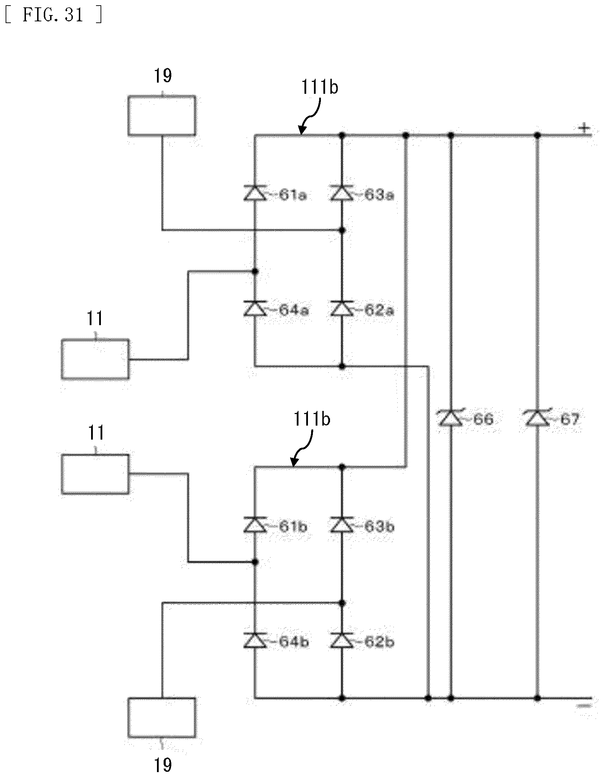

FIG. 31 illustrates a configuration example of the antenna device 111 including the two rectifier circuits 111b that are in parallel connection. The varistor 66 for electrostatic protection and the Zener diode 67 for IC protection are elements common to the two rectifier circuits 11 1b. This makes it possible to obtain output current of 2 µA in a case where output current of 1 µA is obtained from the single antenna device 111, for example. As described above, it is possible to obtain larger output current from the plurality of (two or more) rectifier circuits 111b that are in parallel connection. It is to be noted that, in a case where power supply noise or the like that induces voltage has low frequency, the configuration according to the present modification example is suitable because it is not necessary to consider a distance between antennas.

### [Modification Example D]

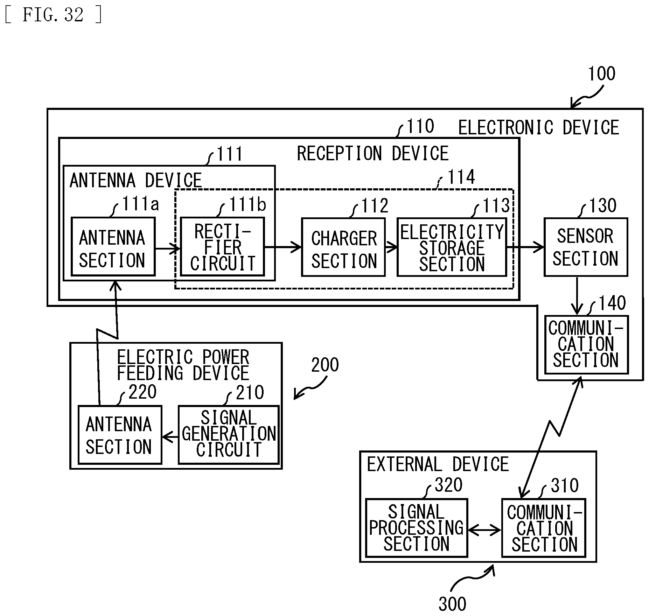

In the above-described embodiment and modification examples thereof, a sensor section 130 and a communication section 140 may be provided instead of the load 120, as illustrated in FIG. 32, for example. In this case, the sensor section 130 operates with use of electric power stored in the electricity storage section 113. For example, the sensor section 130 includes a sensor element that measures an external environment, and the sensor section 130 transmits output (detection data) from the sensor element to an external device 300 via the communication section 140. The communication section 140 is an interface configured to communicate with the external device 300. For example, the external device 300 includes a communication section 310 and a signal processing section 320. The communication section 310 is configured to communicate with the communication section 140 (electronic device 100). The signal processing section 320 processes the detection data acquired from the electronic device 100 via the communication section 310. The communication section 140 and the communication section 310 communicates with each other in conformity with a short-range wireless communication standard such as Bluetooth (registered trademark).

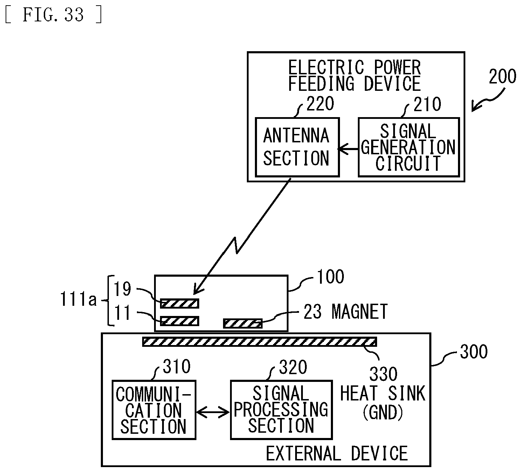

In the present modification example, for example, as illustrated in FIG. 33, the electric power feeding device 200 may include a magnet 23, and the external device 300 may include a heat sink 330. The heat sink 330 includes metal that is configured to be pulled by the magnet 23. In this case, it is assumed that the electric power feeding device 200 is fixed to the external device 300 with use of magnetic force of the magnet 23, and the antenna element 11 is disposed at a position opposed to the heat sink 330. In such a case, the heat sink 330 is in the vicinity of the antenna element 11. This makes it possible to efficiently receive not only electric field energy of radio waves in the transmission frequency band but also electric field energy in a band other than the transmission frequency band (for example, the quasi-electrostatic field (near field) or radio waves in a space).

Note that, it is also possible to appropriately combine the serial connection of the plurality of rectifier circuits 111b and the parallel connection of the plurality of rectifier circuits 111b, depending on necessary voltage and current to be induced.

For example, in a case where the present disclosure is applied to game controllers, it is possible to receive both energy of radio waves of electric power transmission and electric field energy induced in a human body when coming into contact with the human body during playing games. Alternatively, even in a state where the game controller is not used and put on a table, it is possible to charge the game controller by receiving the energy of radio waves of electric power transmission and obtaining electric power. Alternatively, even in a case where the game controller is put on a game console main body, it is possible to receive both the energy of radio waves of electric power transmission and electric field energy induced in the game console main body with use of the above-described method.

In addition, the present disclosure is applicable to TV remote controls and mobile devices including wearable devices.

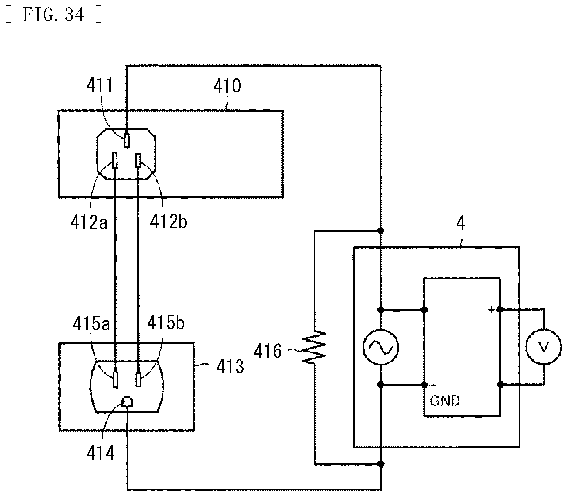

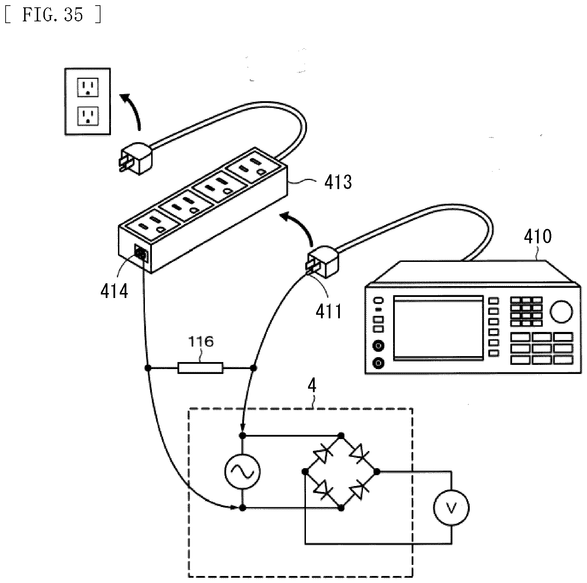

FIG. 34 and FIG. 35 are schematic diagrams illustrating a measurement device that measures a relation between earth resistance and output from a harvester 4.

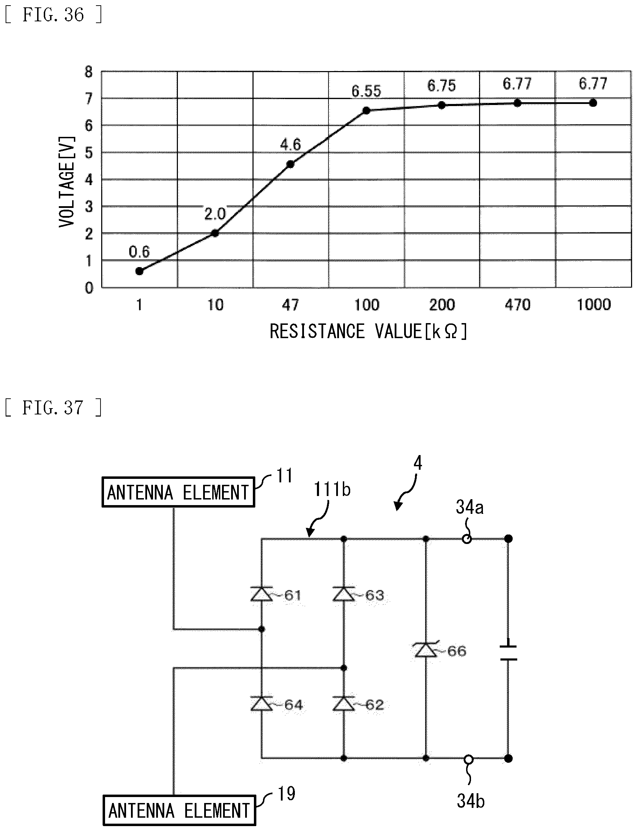

FIG. 36 is a graph illustrating the relation between earth resistance and output from the harvester 4. With regard to the measurement device illustrated in FIG. 34 and FIG. 35, the test harvester 4 (see FIG. 37) is coupled between an earth terminal 411 of a device 410 (here, measurement instrument that operates at AC 100V) and a ground (GND) 414 for sockets of a power strip 413. A resistance element 416 is coupled between input terminals of the harvester 4. The harvester 4 treats the device 410 as an antenna element E1, and treats the power strip 413 as an antenna element E2.

One of the input terminals of the harvester 4 is coupled to the earth terminal 411 of the device 410, and the other of the input terminals of the harvester 4 is coupled to the GND 414. It is to be noted that two power terminals 412a and 412b of the device 410 are respectively coupled to output terminals 415a and 415b of the power strip 413, and are supplied with AC 100V The resistance element 416 is coupled between the input terminals of the harvester 4. The resistance element 416 is an element such as a wire-wound resistor for which a predetermined DC resistance value is set. The resistance element 416 functions as an earth resistance that couples the device 410 and the GND 414. For example, in a case where the resistance element 416 is sufficiently large, the device 410 is substantially floating from the GND 414.

The measurement device illustrated in FIG. 34 and FIG. 35 measures output voltage of the harvester 4 (voltage between output terminals) while varying the DC resistance value of the resistance element 416. FIG. 36 illustrates a graph indicating output voltage [V] detected in the harvester 4 in a case where the DC resistance value [Ω] of the resistance element 416 functioning as the earth resistance is varied. For example, the detected voltage is 0.60 V in a case of a relatively low DC resistance value of 1 kS2. Alternatively, in a case where the DC resistance value is 10 kQ, voltage of 2.00 V is detected. In a case where the DC resistance value is 47 kQ, voltage of 4.60 V is detected. As described above, the ground of the device 410 serving as the antenna element E1 gets closer to a state of floating from the GND 414 that is the earth ground and the detected voltage gets higher as the DC resistance value increases.

When increasing the DC resistance value more, the detected voltage reaches 6.55 V at 100 kQ, for example. This is substantially similar to a value (6.77 V) obtained in a state where the resistance element 416 is removed and the ground of the device 410 is completely floating. In other words, by inserting the resistance element 416 with the DC resistance of about 100 kQ, the antenna element E1 becomes substantially floating from the ground, and this allows the harvester 4 to induce voltage with no problem. It is to be noted that, for example, a resistance value of 10 kΩ or more is enough to induce voltage of 2.00 V or more even if the DC resistance is 100 kΩ or lower.

With reference to FIG. 34, FIG. 35, and FIG. 36, the DC resistance component of the earth resistance has been described. Meanwhile, the electric field energy taken in by the harvester 4 is mainly energy of alternating-current signals. Therefore, for example, if the resistance (impedance) is sufficiently large with respect to an alternating-current signal of desired frequency, it is possible to bring the ground of the device 410 closer to the lifted state at the frequency band, and this makes it possible to induce high voltage. Specifically, it is possible to utilize inductance of a coil or the like.

For example, it is considered that an alternating-current signal of 50 Hz (or 60 Hz) serves as a main resource for the electric field energy in a case of being coupled to an AC power source of 50 Hz (or 60 Hz). Therefore, for example, in a case where impedance of 10 kΩ or more is obtained at 50 Hz (or 60 Hz), the ground of the device 410 becomes substantially floating, and it becomes possible to efficiently take in energy.

However, to prevent human body from electrical injury, some kind of the device 410 coupled to the harvester 4 have to be earthed to the ground in conformity with its safety standard as measures against electrical leakage. In this case, all energy induced in the device 410 escapes to the ground, and no voltage is induced.

According to current safety standards in Japan, examples of devices to which the harvester 4 is applicable include devices for which class D grounding is necessary. The class D grounding is earthing work to be performed on devices, machines, and tools of low voltage (300 V or lower), metal junction boxes, and metal tubes/pipes. For example, the class D grounding is performed on devices that have to be earthed, among devices to be used in connection with a 100 V AC power source. For example, earthing of devices such as microwave ovens, refrigerators, washing machines, clothes dryers, air conditioners, dehumidifiers, various kinds of measurement instruments, robots in factories, and servers comply with class D grounding standards. As described above, the class D grounding serves as a standard for commonly used devices.

Hereinafter, it is assumed that the class D grounding is to be performed on a device to which the harvester 4 is applicable. The class D grounding requires DC earth resistance of 100 S2 or less. It is to be noted that DC earth resistance of 500 S2 or less may be used in a case where a low-voltage electrical path is provided with a device that automatically breaks the electrical path within 0.5 seconds if a ground fault (electrical leakage) occurs. For example, change of the earth resistance from 100 S2 to 500 S2 is approved for the class D grounding if there is a system that blocks electric power to be supplied to the device in a case where dark current is detected.

To solve the above-described issues and induce the electric field energy in the harvester 4, it is desired to achieve a low resistance value at which high impedance is obtained with regard to frequency of an alternating-current signal to be induced in the device 410 and the safety standards are satisfied with regard to DC. In a case of harvesting electric field energy of a certain level of high frequency (100 MHz or higher), it is possible to separate frequency of an alternating-current signal to be harvested from direct current on the basis of inductance of a coil alone, and to obtain high impedance (100 kΩ or more) at the frequency of the alternating-current signal to be harvested. The coil is interposed between an earth wire and the harvester 4.

However, sometimes it is considered that an alternating-current signal of 50 Hz (or 60 Hz) serves as a main resource for the electric field energy in a case of being coupled to a low AC power source such as 50 Hz (or 60 Hz). In such a case, the inductance of the coil alone becomes an enormous value, and it is difficult to create a state of being floating from the space with use of the coil alone. In other words, an inductance value of hundreds of henries is obtained, and this is unrealistic.

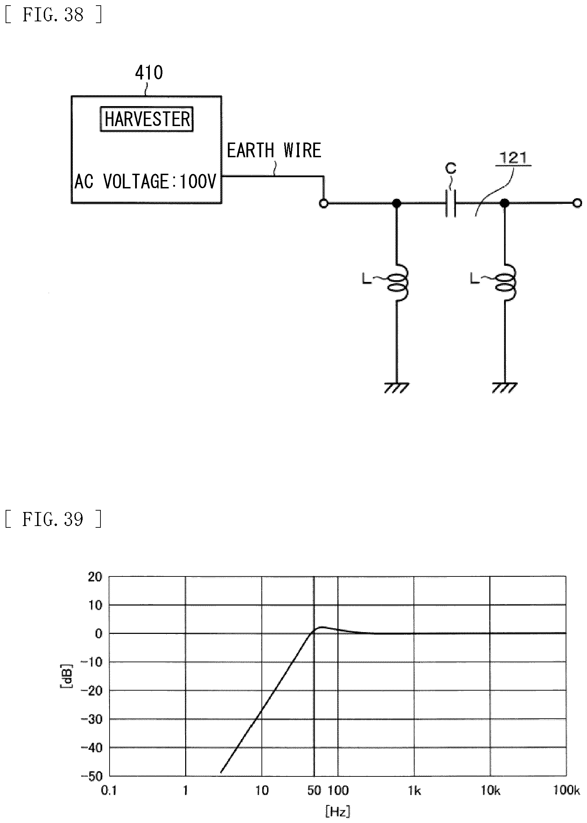

To achieve the state where the device 410 is floating on the basis of such an alternating-current signal of 50 Hz (or 60 Hz), a high-pass filter structure 121 (Chebyshev high-pass filter) illustrated in FIG. 38 is considered. The high-pass filter 121 includes an output terminal in an open state. A coil is provided in an upstream of the filter. Therefore, by setting a DC resistance value of this coil to a value that satisfies the safety standards, it is possible to achieve high impedance (100 kΩ or more) with regard to the alternating-current signal of 50 Hz (or 60 Hz). This makes it possible to reduce the inductance of the coil at low frequency, and this results in downsizing. For example, in a case where such a filter is configured at 50 Hz, the coil has 22 mH, the capacitor has 470 µF, and the coil has DC resistance of 22 Ω.

FIG. 39 illustrates frequency characteristics of the high-pass filter 121. Capacitance of the capacitor includes frequency components, and shows a high value at 50 Hz (or 60 Hz) but decreases at frequency of 1 kHz or more. Accordingly, in a case where a frequency component higher than this is induced in the device 410 as the electric field energy, it is difficult for such a high-pass filter structure 121 alone to harvest the energy.

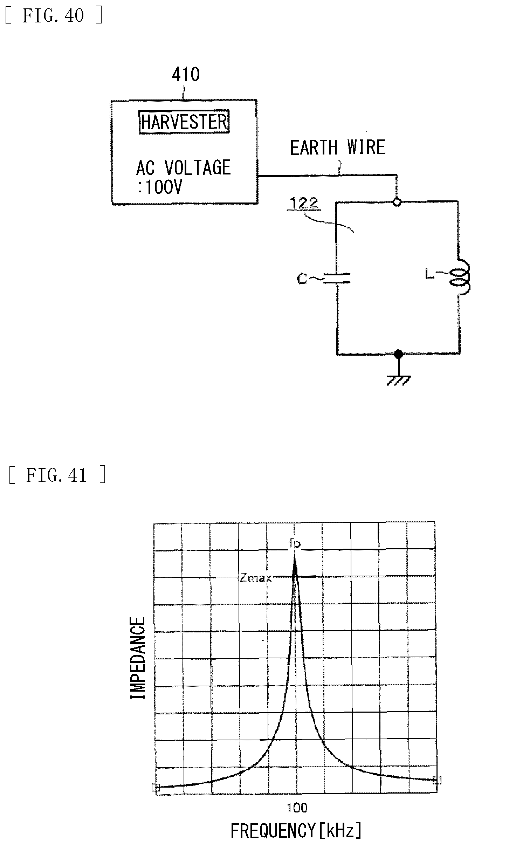

To solve such an issue, as illustrated in FIG. 40, it is possible to preliminarily find the frequency component of the electric field energy induced in the device 410 and provide a parallel resonant circuit 122 having high impedance at such frequency between the earth wire and the ground.

In the parallel resonant circuit 122, the coil and the capacitor are inserted in parallel. Therefore, it is possible to configure the parallel resonant circuit 122 in such a manner that high impedance is achieved at frequency of harvest-target electric field energy induced in the device 410 and the safety standards are satisfied since direct current is DC resistance of the coil. For example, in a case where the parallel resonant circuit 122 is configured in such a manner that maximum impedance is obtained at 100 kHz as illustrated in FIG. 41, the coil has 10 mH, the capacitor has 0.5 µF, and the coil has DC resistance of 0.04 Ω. A frequency range with high impedance becomes wider as Q factor gets higher. Therefore, the parallel resonant circuit 122 is desirably implemented by an electrolytic capacitor.

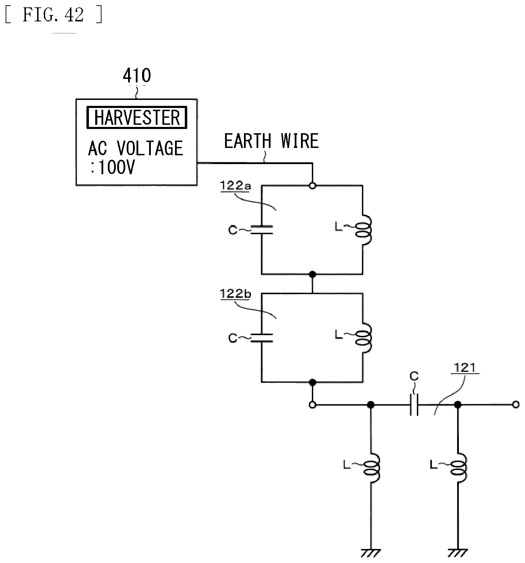

When (at least one or more of) the parallel resonant circuit 122 and the high-pass filter 121 are combined, it is possible to take in the electric field energy corresponding to various frequency components induced in the device 410 while satisfying the safety standard for earthing the device 410 via the earth wire through the class D grounding. The high-pass filter 121 and the parallel resonant circuit 122 may be independently used on the basis of the frequency component of the electric field energy generated in the device 410, or a plurality of the high-pass filter 121 and a plurality of the parallel resonant circuit 122 may be appropriately combined on the basis of harvest frequency while satisfying a resistance value according to the safety standards. FIG. 42 illustrates an example of combining a high-pass filter 121a, a high-pass filter 121b, and the parallel resonant circuit 122.

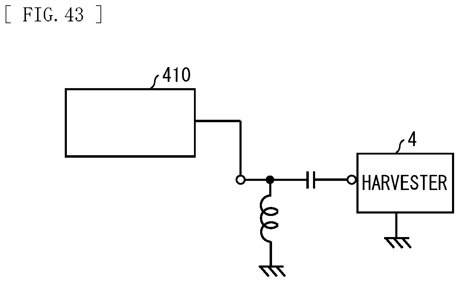

The filter that achieves the state where the device 410 is floating on the basis of the harvest frequency has been described above. However, it is also possible to couple a first antenna element of the harvester 4 to the (open) output terminal of a high-pass filer of a filter before the earth, and a second antenna element may be implemented by the earth (see FIG. 43) or an antenna such as a copper-foil meander line on the substrate. For example, as illustrated in FIG. 35, in a case of a socket with three slots and a GND line, which are generally used in factories, the harvester 4 is installed in a plug section of the device 410, and the GND of the device 410 easily serves as the antenna element. This makes it possible to harvest energy from the whole device 410.

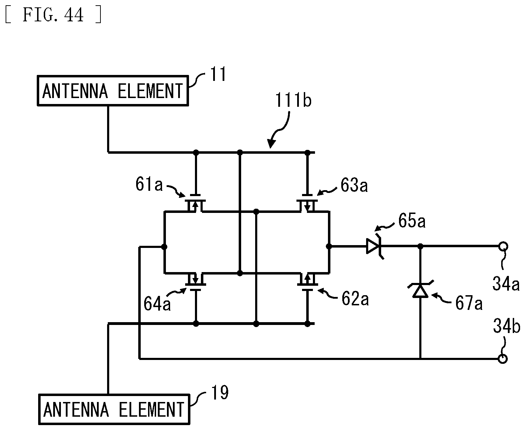

FIG. 44 illustrates a modification example of the circuit configuration of the rectifier circuit 111b. In the above-described embodiment and modification examples thereof, for example, as illustrated in FIG. 44, the rectifier circuit 111b may include an anti-reverse diode 65a, a Zener diode 67a for FET protection, and a rectifier circuit including four field-effect transistors (FETs) 61a, 62a, 63a, and 64a.

The FET 61a and the FET 64a are n-channel FETs, and the FET 62a and FET 63a are p-channel FETs. In the FET 61a and the FET 64a, current flows from a drain to a source when positive voltage is applied to a gate. In the FET 62a and the FET 63a, current flows from a drain to a source when negative voltage is applied to a gate.

The drain of the FET 61a and the drain of the FET 63a are coupled to each other. The drain of the FET 62a and the drain of the FET 64a are coupled to each other. A coupling point of the gates of the FETs 61a and 63a, the drain of the FET 62a, and the drain of the FET 64a is coupled to the antenna element 11. A coupling point of the gates of the FETs 62a and 64a, the drain of the FET 61a, and the drain of the FET 63a is coupled to the antenna element 19.

The sources of the FETs 62a and 63a are coupled to one output terminal 34a via the anti-reverse diode 65a. The sources of the FETs 61a and 64a are coupled to another output terminal 34b. The Zener diode 67a for FET protection is coupled between the output terminal 34a and the output terminal 34b. The four FETs 61a. 62a, 63a, and 64a may be configured by a discrete FET or by a dedicated IC.

It is to be noted that, in the present modification example, the FET 61a and the FET 64a may be n-channel MOSFETs, and the FET 62a and the FET 63a may be p-channel MOSFETs.

Even in a case where the rectifier circuit 111b according to the present modification example is provided in the antenna device 111, it is possible to achieve effects that are similar to the above-described embodiment and modification examples thereof.

In particular, in a case of harvesting low frequency such as 50 HZ, the FETs have better conversion efficiency than the diodes. Accordingly, the diodes may be replaced with the FETs on the basis of frequency of the device to be harvested.

### [Modification Example E]

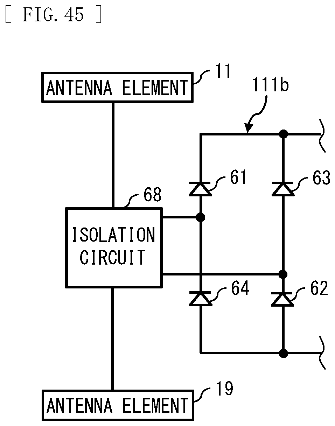

In the above-described embodiment and modification examples thereof, the rectifier circuit 111b may include an isolation circuit 68 between the antenna element 11 and the antenna element 19, as illustrated in FIG. 45, for example. The isolation circuit 68 is coupled to the antenna element 11 and the antenna element 19.

When a device is coupled to an AC power source but does not have to be earthed (in other words, when the device is floating from the earth), such a device is used while a certain resistance value is exhibited between the earth ground and a ground line in the device. Examples of such a device include electric appliances such as televisions, hard disk recorders, game consoles, or audio systems, and mobile objects such as drones or vehicles. In addition, examples of the device that is used while a certain resistance value is exhibited between the earth ground and a ground line in the device (in other words, the device that is floating from the earth) include mobile objects such as drones or vehicles. To allow such devices to efficiently harvest the electric field energy of radio waves in the transmission frequency band from an outside, a ground line of a power supply board including an inverter circuit that generates a large amount of electric power have to be isolated from other metal parts of such a device, in terms of electric potential.

With reference to the above-described experimental results, it is recognized that it is possible to efficiently harvest the electric field energy of radio waves in the transmission frequency band from the outside when the resistance value of 10 kΩ or more is obtained between the ground line and the metal part. In other words, it is possible to efficiently harvest the electric field energy of radio waves in the transmission frequency band from the outside when the ground line serves as the antenna element 19, the metal part serves as the antenna element 11, and the resistance element of 10 kΩ or more is interposed between the antenna element 19 and the antenna element 11. As described above, when the two metal members in the device are isolated from each other in terms of electric potential via the resistance element of 10 kQ, it is possible to obtain larger electric power from the two metal members than a case where the harvester is coupled to an outside of the device.

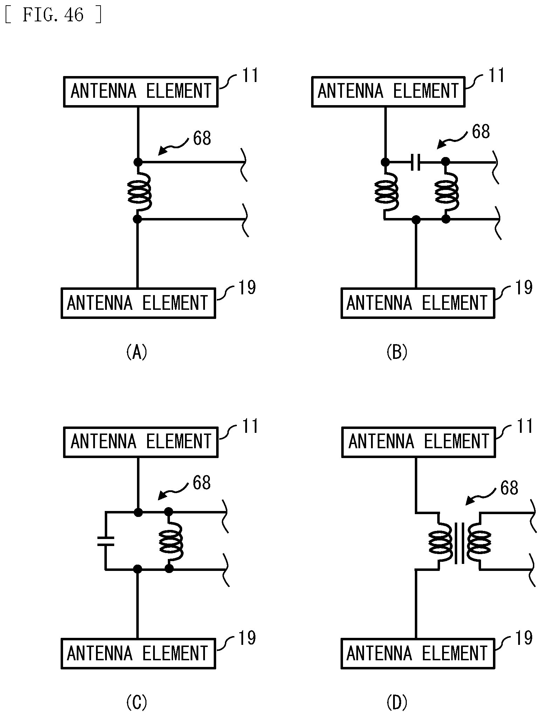

Here, the isolation circuit 68 may be implemented by a band-pass filter having a resistance value of at least 10 kΩ or more in the transmission frequency band between the antenna element 19 and the antenna element 11. Such a band-pass filter may be implemented by an inductor (coil) illustrated in FIG. 46(A), a high-pass filter illustrated in FIG. 46(B), a parallel resonant circuit illustrated in FIG. 46(C), or a transformer illustrated in FIG. 46(D), for example.

In particular, in a case where the isolation circuit 68 is implemented by the transformer illustrated in FIG. 46(D), it is possible to completely isolate the antenna elements 11 and 12 from the rectifier circuit 111b in DC. This results in safe usage of the electronic device 100.

### [Modification Example F]

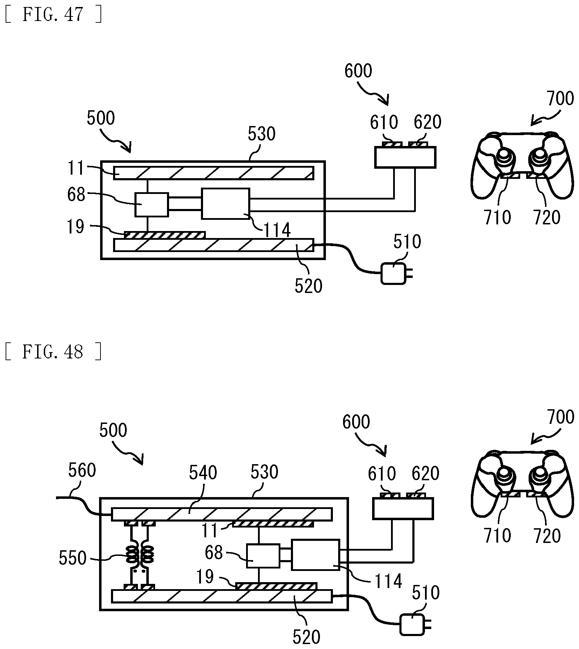

Next, a game console main body 500 including the electronic device 100 according to the above-described embodiment and modification examples thereof will be described. FIG. 47 is a diagram illustrating a circuit configuration example of the game console main body 500. The game console main body 500 is a device that is electrically floating from the earth ground. For example, as illustrated in FIG. 47, the game console main body 500 includes an AC adapter 510, a power supply board 520 coupled to the AC adapter 510, and a control circuit (not illustrated) configured to be supplied with electric power from the power supply board 520.

The control circuit controls the respective functional blocks built in the game console main body 500. For example, the power supply board 520 includes an AC/DC converter that converts AC electric power obtained from an external power source via the AC adapter 510 into DC electric power. For example, the power supply board 520 supplies the DC electric power obtained by the AC/DC converter not only to the control circuit but also to the respective functional blocks built in the game console main body 500. The functional blocks of the game console main body 500 are stored in a casing 530.

For example, as illustrated in FIG. 47, the game console main body 500 further includes the antenna element 11, the antenna element 19, the isolation circuit 68, and the circuit section 114. For example, the antenna element 11 is implemented by a metal heat sink provided in the game console main body 500, a metal part of the casing 530, or the like. In other words, the antenna element 11 includes a conductor disposed on a contact face configured to come into contact with a human body or a metal member. For example, the antenna element 19 is implemented by a ground line provided on the power supply board 520. In other words, the antenna element 19 includes another conductor that is different from the conductor of the antenna element 11, and the antenna element 19 is provided in such a manner that the antenna element 19 does not come into contact with a human body or other metal members.

The isolation circuit 68 is provided between the antenna element 11 and the antenna element 19. The isolation circuit 68 is coupled to the antenna element 11 and the antenna element 19. For example, the isolation circuit 68 is implemented by a circuit illustrated in FIG. 46(A) to FIG. 46(D) or the like. The game console main body 500 further includes communication equipment configured to communicate with a game controller 700.

The circuit section 114 is coupled to a battery charger 600 that charges the game controller 700. The battery charger 600 includes electrodes 610 and 620 that acre coupled to the output terminals of the circuit section 114. The game controller 700 includes an interface, a signal generation circuit, and a transmission circuit. The interface receives an operation from a user. The signal generation circuit generates a control signal on the basis of the operation received by the interface. The transmission circuit transmits the control signal generated by the signal generation circuit to the game console main body 500. The game controller 700 is provided with a power supply circuit, an electrode 710, and an electrode 720. The power supply circuit supplies electric power to the interface, the signal generation circuit, the transmission circuit, and the like. The electrodes 710 and 720 couple the power supply circuit to the battery charger 600.

In the present modification example, the game console main body 500 includes the electronic device 100 according to the above-described embodiment and modification examples thereof. For example, the antenna element 11 is implemented by the metal heat sink provided in the game console main body 500, the metal part of the casing 530, or the like. Therefore, even in a case where the antenna element 19 is implemented by the ground line provided on the power supply board 520, it is possible to apply a large amount of electric current to the metal member that is deemed larger metal with respect to the wavelength, and to efficiently receive electric power.

### [Modification Example G]

Next, a modification example of the game console main body 500 according to the modification example F will be described. FIG. 48 illustrates a circuit configuration example of the game console main body 500 according to the present modification example. For example, as illustrated in FIG. 48, the game console main body 500 according to the present modification example further includes a control board 540, a common-mode choke filter 550, and a communication cable 560.

The control board 540 includes a control circuit that controls the respective functional blocks built in the game console main body 500. The control board 540 is coupled to the common-mode choke filter 550. DC electric power is input from the power supply board 520 to the control board 540 via the common-mode choke filter 550. In addition, the control board 540 is further coupled to the communication cable 560. The control board 540 communicates with external electronic devices via the communication cable 560. The communication cable 560 is a cable with a ground like, such as a LAN cable or an HDMI cable.

In the present modification example, for example, as illustrated in FIG. 48, the antenna element 11 is implemented by a ground line of the control board 540. In other words, the antenna element 11 includes a conductor disposed in such a manner that the conductor comes into contact with a ground line of the communication cable 650.

In the present modification example, DC electric power is input from the power supply board 520 to the control board 540 via the common-mode choke filter 550. This makes it possible to isolate the control board 540 from the power supply board 520 that generate large power source noise. Therefore, it becomes possible to reduce the power source noise propagated to the ground line of the control board 540. In addition, since the control board 540 is coupled to the communication cable 560, it is possible to apply a large amount of electric current to the metal member that is deemed larger metal with respect to the wavelength, and to efficiently receive electric power from an outside.

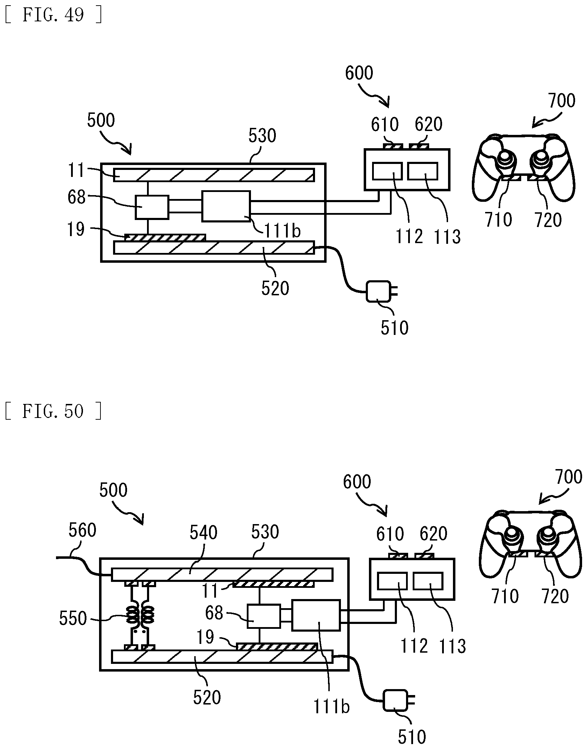

In the modification example F and the modification example G, the rectifier circuit 111b may be provided in the game console main body 500, and the charger section 112 and the electricity storage section 113 may be provided in the battery charger 600 , as illustrated in FIG. 49 and FIG. 50, for example. Even in such a case, this makes it possible to efficiently receive electric power.

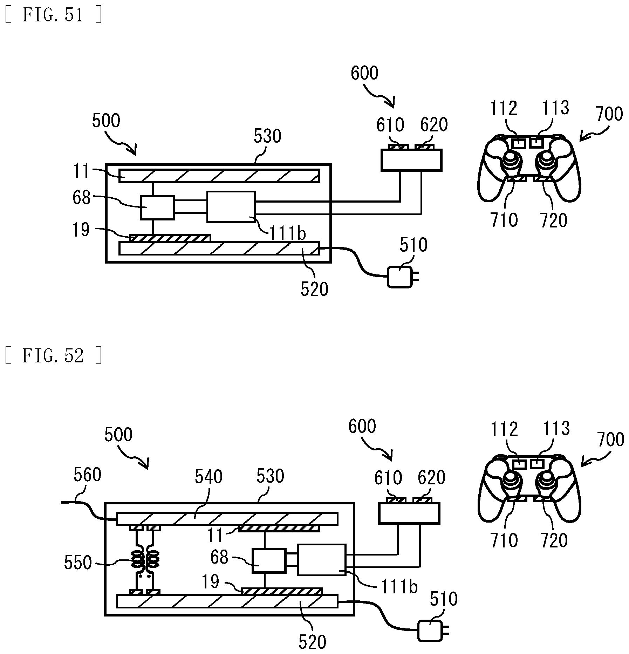

In the modification example F and the modification example G, the rectifier circuit 111b of the circuit section 114 may be provided in the game console main body 500, and the charger section 112 and the electricity storage section 113 of the circuit section 114 may be provided in the game controller 700, as illustrated in FIG. 51 and FIG. 52, for example. Even in such a case, this makes it possible to efficiently receive electric power from an outside.

In the modification example F and the modification example G, for example, the rectifier circuit 111b may be provided in the game console main body 500, the charger section 112 and the electricity storage section 113 may be provided in the battery charger 600, and another charger section 112 and another electricity storage section 113 may also be provided in the game controller 700. In such a case, it is possible to stores a portion of the electric power stored in the electricity storage section 113 of the battery charger 600, in the electricity storage section 113 of the game controller 700.

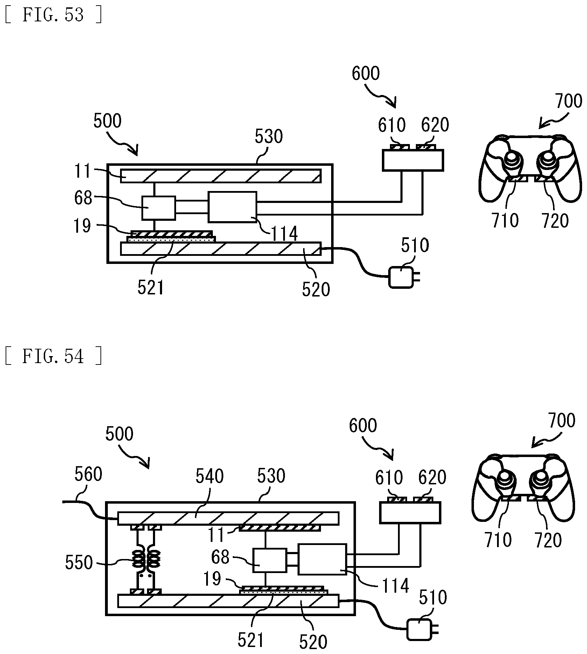

In the modification example F and the modification example G, for example, as illustrated in FIG. 53 and FIG. 54, the antenna element 19 may be capacitively coupled to a wiring line (noise source) via an insulating member 521. The wiring line (noise source) is coupled to the AC/ DC converter of the power supply board 520. Even in such a case, this makes it possible to efficiently receive electric power from an outside.

In addition, in the above-described embodiments, the electric power is drawn into the battery charger 600 with use of a cable or the like. Alternatively, it is also possible to provide a charging terminal on the game console main body 500.

It is to be noted that the configurations according to the modification example F and the modification example G are also applicable to televisions, hard disk recorders, audio systems, and the like. In addition, the configurations according to the modification example F and the modification example G are usable as an internal battery of a device and a power source for temperature measurement inside the device, and the like.

### [Modification Example H]

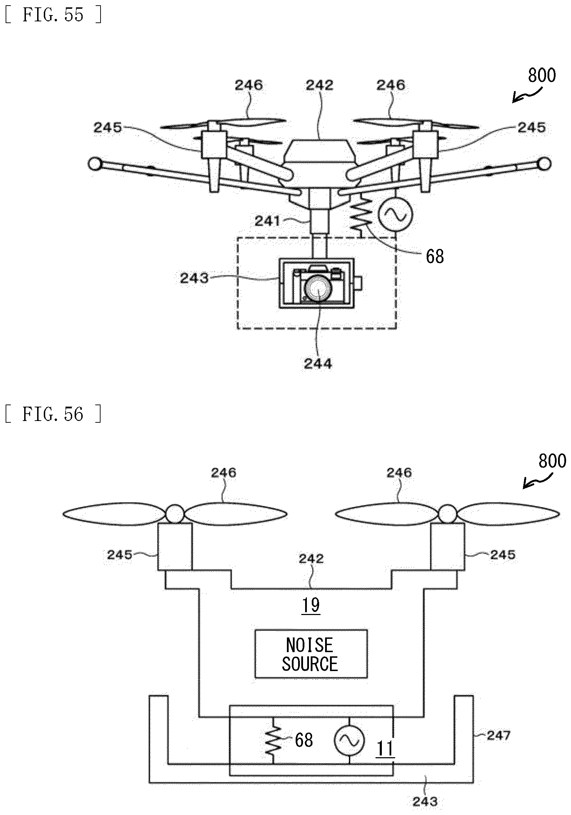

Next, a drone (unmanned aerial vehicle) 800 including the electronic device 100 according to the above-described embodiment and modification examples thereof will be described. FIG. 55 and FIG. 56 illustrate a schematic configuration example of the drone 800. The drone 800 includes a metal trunk section 241, a main body section 424, a metal frame 243, and an image-capturing device 244. The main body section 424 is attached to an upper portion of the trunk section 241. The metal frame 243 has a box-like shape and is attached to a lower portion of the trunk section 241. The image-capturing device 244 is attached inside the metal frame 243.

The main body section 424 is provided with a metal case serving as a casing. The metal case stores a control section, a battery (such as the charger section 112 and the electricity storage section 113) serving as a power source, and the like therein. The main body section 424 is further provided with a circuit section including the rectifier circuit 111b or the like. The drone 800 further includes a plurality of support shafts that extend substantially horizontally from the main body section 424, a plurality of motors 245 prepared on respective tip surfaces of the support shafts, and a plurality of rotary wings 246 prepared for the respective motors 245. The respective rotary wings 246 are driven by the corresponding motors 245. The main body section 242 stores a motor control circuit that controls the respective motors 245.

An upper metal member of the drone 800 includes the main body section 242 (metal case), the motors 245, the rotary wings 246, and the like, and the upper metal member corresponds to the antenna element 19 including the noise source. A lower metal member of the drone 800 includes the metal frame 243 and the like, and the lower metal member corresponds to the antenna element 11. The upper metal member is not in contact with the lower metal member, and includes a different conductor from the lower metal member. The antenna element 11 includes a conductor disposed on a contact face configured to come into contact with a human body or a metal member.

The drone 800 includes the isolation circuit 68between the antenna element 19 and the antenna element 11. The isolation circuit 68 is coupled to the antenna element 11 and the antenna element 19. For example, the isolation circuit 68 is implemented by the circuit illustrated in FIG. 46(A) to FIG. 46(D) or the like.

For example, as illustrated in FIG. 56, the metal frame 243 has a side surface 247 that extends in an upper direction (or a lower direction), which enlarges the antenna size. This makes it possible to improve sensitivity of the antenna element as the side surface 247 extends.

In the present modification example, the drone 800 includes the electronic device 100 according to the above-described embodiment and modification examples thereof. The antenna element 11 is implemented by the lower metal member including the metal frame 243 and the like. Accordingly for example, as illustrated in FIG. 56, the metal frame 243 has the side surface 247 that extends in the upper direction (or the lower direction), which makes it possible to enlarge the antenna size. As a result, even in a case where the antenna element 19 has a limited size, it becomes possible to apply a large amount of electric current to the metal member that is deemed larger metal with respect to the wavelength, and to efficiently receive electric power. This makes it possible to supply electric power taken out by the antenna elements 11 and 19, to various kinds of sensor installed in the drone 800.

It is to be noted that the configuration according to the present modification example is applicable to vehicles such as cars and buses. The vehicle such as a car or a bus is in contact with a land surface via tires having earth resistance of 10 MS2, to discharge static electricity. When the tire has the earth resistance of 10 kΩ or more, it can be said that the vehicle such as a car or a bus is floating from the earth. An engine and a chassis of the vehicle such as a car or a bus correspond to the antenna element 11, and doors and a hood of the vehicle correspond to the antenna element 19. The engine and the chassis are isolated from the doors and the hood in terms of electric potential via the isolation circuit 68. In a case where the circuit 114 is coupled to the antenna elements 11 and 19 via the isolation circuit 68, it becomes possible to taken in large electric power from the antenna elements 11 and 19. This makes it possible to supply the electric power taken out by the antenna elements 11 and 19, to various kinds of sensor installed in the vehicle such as a car or a bus, for example.

### [Modification Example I]

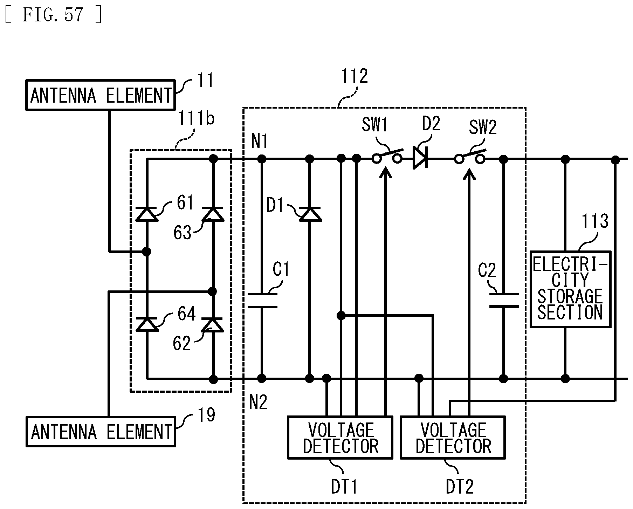

Next, a modification example of the charger section 112 according to the above-described embodiment and modification examples thereof will be described. FIG. 57 illustrates a circuit configuration example of the electronic device 100 according to the above-described embodiment and modification examples thereof.

It is assumed that a prescribed value of charging voltage of the electricity storage section 113 is 2.5 V In this case, it is not appropriate to apply a MAX voltage (voltage of 2.7 V or more) that exceeds the prescribed value (2.5 V) of charging voltage of the electricity storage section 113 to the electricity storage section 113 when the electricity storage section 113 is directly charged with a voltage (for example, about 40 V) induced in the antenna elements 11 and 19. Therefore, for example, installation of a Zener diode is considered to limit the voltage induced in the antenna elements 11 and 19 to the MAX charging voltage (2.7 V) of the electricity storage section 113. However, such a Zener diode has on-voltage of about 1 V Therefore, protective electrical current will flow through the Zener diode when the voltage induced in the antenna elements 11 and 19 exceeds 1 V Accordingly, it is difficult to efficiently charge the electricity storage section 113 in the case where such a Zener diode is installed.

Therefore, the charger section 112 according to the present modification example includes a capacitor C1 between a coupling point N1 and a coupling point N2. Dielectric strength of the capacitor C1 is 50 V, which is larger than the voltage induced in the antenna elements 11 and 19. The coupling point N1 is a coupling point between the cathode of the diode 61 and the cathode of the diode 63. The coupling point N2 is a coupling point between the anode of the diode 62 and the anode of the diode 64. The capacitor C1 temporarily stores DC energy obtained through rectification by the rectifier circuit 111b.

In addition, the charger section 112 according to the present modification example includes a Zener diode D1 for protecting a voltage detector DT1 (IC circuit) (to be described later). The Zener diode D1 is provided in parallel to the capacitor C1. The Zener diode D1 limits voltage to be applied to the voltage detector DT1 (input terminal of switch SW1 to be described later) to a voltage (6.5 V) lower than dielectric strength of the voltage detector DT1 (IC circuit).

The charger section 112 according to the present modification example further includes a diode circuit (switch SW1 and anti-reverse diode D2) and a switch SW2. The diode circuit is in serial connection with the coupling point N1. The switch SW2 is in serial connection with the coupling point N1 via the diode circuit. The anti-reverse diode D2 is provided for preventing current from flowing from the electricity storage section 113 in the opposite direction when upstream voltage decreases.

The diode circuit is turned on/off in response to a control signal from the voltage detector DT1. Specifically, the diode circuit is turned on in response to the control signal from the voltage detector DT1 when voltage of the coupling point N1 becomes a predetermined value (2.4 V) that is lower than the prescribed value (2.5 V) of charging voltage of the electricity storage section 113. The switch SW2 is turned on/off in response to a control signal from a voltage detector DT2 (to be described later). Specifically, the switch SW2 is turned on in response to the control signal from the voltage detector DT2 (to be described later)when voltage of an output terminal of the diode circuit becomes a predetermined MAX value (2.7 V) that is higher than the prescribed value (2.5 V) of charging voltage of the electricity storage section 113.

The voltage detector DT1 includes a sensor and a signal generation circuit. The sensor detects voltage between the coupling point N1 and the coupling point N2. The signal generation circuit outputs voltage depending on a result of the detection made by the sensor. The signal generation circuit outputs on-voltage to the switch SW1 when the voltage between the coupling point N1 and the coupling point N2 becomes the predetermined value (2.4 V) that is lower than the prescribed value (2.5 V) of charging voltage of the electricity storage section 113. The signal generation circuit outputs off-voltage to the switch SW1 when the voltage between the coupling point N1 and the coupling point N2 becomes less than the predetermined value (2.4 V) that is lower than the prescribed value (2.5 V) of charging voltage of the electricity storage section 113.

The voltage detector DT2 includes a sensor and a signal generation circuit. The sensor detects voltage of the electricity storage section 113. The signal generation circuit outputs voltage depending on a result of the detection made by the sensor. The signal generation circuit outputs on-voltage to the switch SW2 when the voltage of the output terminal of the diode circuit becomes the predetermined MAX value (2.7 V) that is higher than the prescribed value (2.5 V) of charging voltage of the electricity storage section 113. The signal generation circuit outputs off-voltage to the switch SW2 when the voltage of the output terminal of the diode circuit becomes less than the predetermined MAX value (2.7 V) that is higher than the prescribed value (2.5 V) of charging voltage of the electricity storage section 113.

As described above, the charger section 112 according to the present modification example has the above-described circuit configuration. This makes it possible to temporarily store DC energy (voltage) obtained through rectification by the rectifier circuit 111b in the capacitor C1, and transfer the DC energy (voltage) stored in the capacitor C1 to the electricity storage section 113 via the switch circuit (the above-described d circuit and switch SW2). Therefore, it becomes possible to efficiently charge the electricity storage section 113 even in a case where voltage of 40 V is induced in the antenna elements 11 and 19.

It is to be noted that the charger section 112 includes a capacitor C2 for protecting the electricity storage section 113. The capacitor C2 is in parallel connection with the electricity storage section 113. For example, it is possible to flow inrush current output from the capacitor C1 into the capacitor C2 when the switch SW2 is turned on from the off state after the electricity storage section 113 is fully charged. This prevents voltage (6.5 V) stored in the capacitor C1 from being directly applied to the electricity storage section 113 that has been fully charged.

For example, the present disclosure may be configured as follows.
(1) An antenna device including:
   an antenna that has a dipole structure, and receives electric field energy of a radio wave in a frequency band to be used for space transmission wireless electric power feeding,
   in which the antenna includes
      a first antenna element including a conductor disposed on a contact face configured to come into contact with a human body or a metal member, and
      a second antenna element including another conductor that is different from the conductor of the first antenna element, the second antenna element being provided in such a manner that the second antenna element does not come into contact with the human body or the metal member.
(2) The antenna device according to (1), in which the frequency band includes a 900 MHz band, a 2 GHz band, or a 5 GHz band.
(3) The antenna device according to (1) or (2), in which the second antenna element has a length that is shorter than 1/4 of wavelength of the frequency band.
(4) The antenna device according to any one of (1) to (3), in which
   the first antenna element has at least one of a plate-like shape, a meander-like shape, or a coil-like shape, and
   the second antenna element has at least one of a plate-like shape, a meander-like shape, or a coil-like shape.
(5) The antenna device according to any one of (1) to (3) in which the second antenna element includes a first antenna section having a plate-like shape and a second antenna section having a coil-like shape, the second antenna element being coupled to a tip of a corner of the first antenna section.
(6) The antenna device according to any one of (1) to (5), in which the second antenna element is configured to allow the antenna to resonate in the frequency band regardless of whether or not the first antenna element is in contact with the human body or the metal member.
(7) The antenna device according to any one of (1) to (6), in which
   the first antenna element includes a conductor electrode including one material or a combination of two or more materials selected from gold, silver, aluminum, copper, iron, nickel, an alloy, electrically conductive resin, or electrically conductive rubber, and
   the second antenna element includes a conductor electrode including one material or a combination of two or more materials selected from gold, silver, aluminum, copper, iron, nickel, an alloy, electrically conductive resin, or electrically conductive rubber.
(8) The antenna device according to any one of (1) to (7), further including a rectifier circuit that has an input terminal coupled to the first antenna element and the second antenna element and that rectifies a signal received by the antenna from an alternating-current signal to a direct-current signal.
(9) An electronic apparatus including:
   an antenna that has a dipole structure, and receives electric field energy of a radio wave in a frequency band to be used for space transmission wireless electric power feeding; and
   a rectifier circuit that rectifies a signal received by the antenna from an alternating-current signal to a direct-current signal,
   in which the antenna includes
      a first antenna element including a conductor disposed on a contact face configured to come into contact with a human body or a metal member, and
      a second antenna element including another conductor that is different from the conductor of the first antenna element, the second antenna element being provided in such a manner that the second antenna element does not come into contact with the human body or the metal member.
(10) The electronic device according to (9), further including an electricity storage section that stores energy of the direct-current signal obtained by the rectifier circuit.
(11) The electronic device according to (10), further including a load that uses electric power stored in the electricity storage section.
(12) The electronic device according to (10), further including:
   a sensor that uses electric power stored in the electricity storage section; and
   a communication section that outputs an output of the sensor to an external device.
(13) The electronic device according to any one of (9) to (12), in which
   the rectifier circuit further includes an isolation circuit provided between the first antenna element and the second antenna element,
   the isolation circuit includes a band-pass filter having a resistance value of at least 10 kΩ or more in the frequency band between the first antenna element and the second antenna element.
(14) The electronic device according to (13), in which the band-pass filter includes an inductor, a high-pass filter, a parallel resonant circuit, or a transformer.
(15) The electronic device according to (10), further including:
   a capacitor that temporarily stores direct-current voltage obtained by the rectifier circuit; and
   a switch circuit that transfers the direct-current voltage stored in the capacitor to the electricity storage section.

The antenna device according to the first aspect of the present disclosure and the electronic device according to the second aspect of the present disclosure include the antenna that has a dipole structure, and receives electric field energy of a radio wave in a frequency band to be used for the space transmission wireless electric power feeding. The antenna section includes the first antenna element and the second antenna element. The first antenna element includes a conductor disposed on the contact face configured to come into contact with a human body or a metal member. The second antenna element includes another conductor that is different from the conductor of the first antenna element, and is provided in such a manner that the second antenna element does not come into contact with the human body or the metal member. This makes it possible to use the human body or the metal member as a portion of the first antenna element. As a result, this makes it possible to efficiently receive electric power even in a case where the second antenna element has a short length. Therefore, it is desirable for the small-sized devices to effectively receive the electric field energy of radio waves in the transmission frequency band. It is to be noted that the effects of the present disclosure are not limited to the effect stated herein and may achieve any of the effects described in this specification.

An energy collection device according to the present technology makes it possible to supply energy to sensors when the energy collection device is in contact with or is coupled to the sensors. Therefore, it is possible to efficiently utilize the energy. Such sensors are used in smart factories and smart cities, and battery change or electric power supply is necessary for such sensors. Accordingly, the energy collection device according to the present technology may be related to Sustainable Development Goal (SDG) 7 "Affordable and Clean Energy" that is established by the United Nations General Assembly in 2015.

The present application claims the benefit of Japanese Priority Patent Application JP2021-215250 filed with the Japan Patent Office on December 28, 2021 and International Patent Application No. PCT/JP2022/040492 filed on October 28, 2022, the entire contents of which are incorporated herein by reference.

It should be understood by those skilled in the art that various modifications, combinations, sub-combinations and alternations may occur depending on design requirements and other factors insofar as they are within the scope of the appended claims or the equivalents thereof.

## Claims

1. An antenna device comprising
an antenna that has a dipole structure, and resonates and receives electric field energy of a radio wave in a frequency band to be used for space transmission wireless electric power feeding,
wherein the antenna includes
a first antenna element including a conductor disposed on a contact face configured to come into contact with a human body or a metal member, and
a second antenna element including another conductor that is different from the conductor of the first antenna element, the second antenna element being provided in such a manner that the second antenna element does not come into contact with the human body or the metal member.

2. The antenna device according to claim 1, wherein the frequency band comprises a 900 MHz band, a 2 GHz band, or a 5 GHz band.

3. The antenna device according to claim 1, wherein the second antenna element has a length that is shorter than 1/4 of wavelength of the frequency band.

4. The antenna device according to claim 1, wherein
the first antenna element has at least one of a plate-like shape, a meander-like shape, or a coil-like shape, and
the second antenna element has at least one of a plate-like shape, a meander-like shape, or a coil-like shape.

5. The antenna device according to claim 1, wherein the second antenna element includes a first antenna section having a plate-like shape and a second antenna section having a coil-like shape, the second antenna element being coupled to a tip of a corner of the first antenna section.

6. The antenna device according to claim 1, wherein the second antenna element is configured to allow the antenna to resonate in the frequency band regardless of whether or not the first antenna element is in contact with the human body or the metal member.

7. The antenna device according to claim 1, wherein
the first antenna element includes a conductor electrode including one material or a combination of two or more materials selected from gold, silver, aluminum, copper, iron, nickel, an alloy, electrically conductive resin, or electrically conductive rubber, and
the second antenna element includes a conductor electrode including one material or a combination of two or more materials selected from gold, silver, aluminum, copper, iron, nickel, an alloy, electrically conductive resin, or electrically conductive rubber.

8. The antenna device according to claim 1, further comprising a rectifier circuit that has an input terminal coupled to the first antenna element and the second antenna element and that rectifies a signal received by the antenna from an alternating-current signal to a direct-current signal.

9. An electronic apparatus comprising:
an antenna that has a dipole structure, and resonates and receives electric field energy of a radio wave in a frequency band to be used for space transmission wireless electric power feeding; and
a rectifier circuit that rectifies a signal received by the antenna from an alternating-current signal to a direct-current signal,
wherein the antenna includes
a first antenna element including a conductor disposed on a contact face configured to come into contact with a human body or a metal member, and
a second antenna element including another conductor that is different from the conductor of the first antenna element, the second antenna element being provided in such a manner that the second antenna element does not come into contact with the human body or the metal member.

10. The electronic device according to claim 9, further comprising an electricity storage section that stores energy of the direct-current signal obtained by the rectifier circuit.

11. The electronic device according to claim 10, further comprising a load that uses electric power stored in the electricity storage section.

12. The electronic device according to claim 10, further comprising:
a sensor that uses electric power stored in the electricity storage section; and
a communication section that outputs an output of the sensor to an external device.

13. The electronic device according to claim 9, wherein
the rectifier circuit further includes an isolation circuit provided between the first antenna element and the second antenna element,
the isolation circuit includes a band-pass filter having a resistance value of at least 10 kΩ or more in the frequency band between the first antenna element and the second antenna element.

14. The electronic device according to claim 13, wherein the band-pass filter includes an inductor, a high-pass filter, a parallel resonant circuit, or a transformer.

15. The electronic device according to claim 10, further comprising:
a capacitor that temporarily stores direct-current voltage obtained by the rectifier circuit; and
a switch circuit that transfers the direct-current voltage stored in the capacitor to the electricity storage section.
